(19) Europäisches Patentamt
European Patent Office
Office européen des brevets

(11) **EP 2 586 694 A1**

(12) **EUROPEAN PATENT APPLICATION**
published in accordance with Art. 153(4) EPC

(43) Date of publication:
**01.05.2013 Bulletin 2013/18**

(51) Int Cl.:
**B62M 6/65** (2010.01)   **F16H 3/44** (2006.01)
**F16H 3/54** (2006.01)

(21) Application number: **11798084.7**

(22) Date of filing: **20.06.2011**

(86) International application number:
**PCT/JP2011/064033**

(87) International publication number:
**WO 2011/162200 (29.12.2011 Gazette 2011/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2010   JP 2010183681
23.06.2010   JP 2010142738**

(71) Applicant: **NTN Corporation
Osaka-shi, Osaka 550-0003 (JP)**

(72) Inventor: **ITO Kiyohiro
Iwata-shi
Shizuoka 438-0037 (JP)**

(74) Representative: **Grünecker, Kinkeldey,
Stockmair & Schwanhäusser
Leopoldstrasse 4
80802 München (DE)**

(54) **ELECTRICALLY ASSISTED BICYCLE**

(57)    A device which is compact, including a reducer, an electric motor, and a transmission which are arranged side by side along an axle. The transmission (3), reducer (16), and driving motor (15) are disposed within a rear hub (1) so as to lie side by side in the direction of the axis of the axle (5). The transmission (3) transmits a pedaling force to a driving wheel (45) through a sprocket (4). The reducer (16) transmits to the drive wheel (45) a driving force transmitted from the driving motor (15). The transmission (3) includes a sun gear (3a), planetary gears (3b), and a planetary carrier (3c). The transmission (3) further includes a control mechanism (10) for causing the transmission to be shifted between a position at which the transmission's sun gear (3a) can rotate about the axle (5) by the driving force from the sprocket (4) and a position at which the transmission's sun gear (3a) cannot rotate. The reducer (16) includes a sun gear (16a) and planetary gears (16b). The reducer's planetary gears (16b) are held by the transmission's planetary carrier (3c). A clutch (30) is provided between a motor housing (15b) and a reducer's outer ring gear (16d) which meshes with the reducer's planetary gears (16b).

Fig.1

EP 2 586 694 A1

**Description**

TECHNICAL FIELD

This invention relates to an electric power assisted bicycle, i.e. a bicycle in which an assisting force produced by an electric motor is used in addition to manual driving force to drive the bicycle.

BACKGROUND ART

Many kinds of bicycle transmissions know. These conventional bicycle transmissions are generally classified into two categories, which are derailleur gears, which include multiple sprockets coaxially mounted on one or both of the crankshaft and the rear axle, and a derailer for moving the chain from one to another of the multiple sprockets, and internal hub gears, which include gears mounted in the rear hub, wherein the chain can be selectively brought into engagement with any selected one of these gears.

Derailleur gears are simple in structure and lightweight. But their sprockets and chains tend to become worn quickly, and their chains tend to come off easily. Internal hub gears are sufficiently protected against dust and water, and are practically maintenance-free. The latter transmissions are therefore used in many city bicycles.

Power assisted bicycles (i.e. bicycles including an electric motor used to supplement the manual driving force) are known in which the motor, a transmission and a reducer are mounted in the rear hub of the rear (drive) wheel of the bicycle.

If a transmission is used in a power assisted bicycle of the type in which a driving motor is mounted in the rear hub (such a bicycle is called a "rear-hub-motor type power assisted bicycles"), such a transmission may be either an externally mounted transmission or an internally mounted transmission,

If an externally mounted transmission is used, while the hub is simple in structure because the hub contains mainly the motor and the reducer only, the externally mounted transmission poses the above-described maintenance-related problems. If an internally mounted transmission is used, while the structure of the hub tends to be more complicated because it contains the transmission in addition to the motor and the reducer, the internally mounted transmission provides advantages as described above.

Currently, most power assisted bicycles are city bicycles and thus most of them use internal hub gears. It is therefore considered advantageous to use internal hub gears in rear-hub-motor type power assisted bicycles too.

Power assisted bicycles including internal hub gears are disclosed in Patent documents 1 and 2.

The bicycle disclosed in either of these publications includes an electric motor, first and second reducers and a transmission all mounted in the rear hub. The first reducer is used to reduce the rotation of the motor. Manual force is applied to a sprocket mounted around the axle of the drive wheel. The transmission is provided radially outwardly of the sprocket, and the second reducer, which is for manual force input, is provided radially outwardly of the transmission.

The rear hub has a rotary casing and a stationary casing. The component parts involved in transmitting manual force are provided on the side of the rotary casing, and the component parts involved in transmitting the driving force from the electric motor are mainly provided on the side of the stationary casing.

Manual force applied to the pedals is transmitted to the sprocket of the drive wheel through the chain, and after being changed in speed in the transmission, transmitted to the second reducer to rotate the drive wheel through the rotary casing. The driving force from the electric motor is reduced in speed in the first reducer, and transmitted to the rotary casing. Thus, the manual force and the driving force from the motor are transmitted to the rotary casing to drive the drive wheel in cooperation with each other.

The power assisted bicycle includes a control unit which receives an electric signal indicative of the magnitude of the manual force and an electric signal from a speed sensor which indicates the traveling speed of the bicycle and produces a motor drive signal based on these two electric signals and based predetermined conditions to optimally control the electric motor.

In either of these bicycles, the electric motor is mounted offset from the axis of the axle, which increases the outer diameter of the hub. The larger the outer diameter of the hub, the worse the weight balance of the bicycle tends to become.

In this regard, the arrangements of Patent documents 3 and 4 are preferable because in these arrangements, a reducer, an electric motor and a transmission are mounted on the axle so as to be aligned with and in juxtaposition with each other in the axial direction of the axle, so that the hub is sufficiently compact in size.

In these arrangements, manual force applied to the pedals is transmitted to the sprocket through the chain, and then transmitted through a one-way clutch to the transmission where the manual force is changed in speed. The manual force is then transmitted to the rotary casing to the rotate the drive wheel. The driving force from the electric motor is reduced in speed in the reducer, which is a planetary gear mechanism mounted around the axle, and then transmitted to the rotary casing, where the driving force from the motor is merged with the manual force to drive the drive wheel in cooperation with each other.

PRIOR ART DOCUMENTS

PATENT DOCUMENTS

Patent document 1: JP Patent Publication 9-58568A
Patent document 2: JP Patent Publication 2000-043780A
Patent document 3: JP Patent Publication 2002-298285A
Patent document 4: JP Patent Publication 2003-160089A

SUMMARY OF THE INVENTION

OBJECT OF THE INVENTION

In the arrangements of Patent documents 3 and 4, the output from the electric motor is transmitted to the hub case (rotary casing) through the reducer, while manual force applied to the pedals is transmitted to the hub case (rotary casing) through the transmission.

Thus, the reducer, electric motor and transmission, which are mounted on the axle so as to be aligned with and in juxtaposition with each other in the axial direction of the axle, are independent of each other, which means that manual force and the driving forth from the motor are transmitted through completely different routes.

In these arrangements, because the dimension of the installation space in the axial direction of the hub of the drive wheel is limited, and because the above two forces are transmitted through different routes, it is difficult to ensure sufficient installation space for the transmission. This in turn makes it different to provide the transmission with a large number of speed ratios.

An object of the present invention is, in a power assisted bicycle in which a reducer, an electric motor and a transmission are mounted on the axle so as to be aligned with and in juxtaposition with each other in the axial direction of the axle, to minimize the combined size of these three devices and to maximize the available difference between the highest and lowest speed ratios and the available number of speed ratios.

MEANS TO ACHIEVE THE OBJECTS

In order to achieve this object, according to this invention, a transmission, a reducer and a driving motor are mounted on the axle so as to be aligned with and in juxtaposition with each other in the axial direction of the axle, the transmission and the reducer are both planetary gear mechanisms, and the planetary carrier of one of the planetary gear mechanisms is used also as the planetary carrier of the other of the planetary gear mechanisms. With this arrangement, it is possible to minimize the combined axial dimension of these three devices.

More specifically, the present invention provides an electric power assisted bicycle comprising a drive wheel having a hub and an axle, a transmission, a reducer and a driving motor which are mounted in the hub so as to be aligned with and in juxtaposition with each other in an axial direction of the axle, pedals, a power transmission element, wherein the transmission is capable of transmitting manual driving force applied to the transmission through the pedals and the power transmission element to the drive wheel, wherein the transmission comprises a planetary gear mechanism comprising at least one sun gear, planetary gears meshing with the sun gear, a planetary carrier supporting the planetary gears, and an outer ring gear meshing with the planetary gears, and a transmission control mechanism changeable between a first position where the sun gear of the transmission is rotationally fixed to the axle and a second position where the sun gear of the transmission is rotatable relative to the axle, wherein the reducer comprises a planetary gear mechanism comprising at least one sun gear, planetary gears meshing with the sun gear of the reducer, and supported by the planetary carrier of the transmission or by a member configured to rotate in unison with the planetary carrier of the transmission, and an outer ring gear meshing with the planetary gears of the reducer, wherein the driving motor is mounted in a motor housing, and wherein a clutch is provided between the outer ring gear of the reducer and the motor housing.

With this arrangement, the planetary gears of the reducer are supported by the planetary carrier of the transmission or a member configured to rotate in unison with the planetary carrier of the transmission. Thus, the planetary carrier of the transmission and the planetary carrier of the reducer are either the same common member or are members that rotate in unison with each other. In either case, it is possible to minimize the combined dimension of the three devices in the axial direction of the axle, and/or it is possible to maximize the available difference between the highest and lowest speed ratios or the available number of speed ratios.

By the provision of the clutch between the outer ring gear of the reducer and the motor housing, although the driving force from the driving motor is transmitted to the planetary carrier, while the bicycle is being driven by manual force applied to the pedals alone with no assisting force from the motor, the manual force is transmitted to the planetary gears of the reducer but not to the output shaft of the driving motor because in this state, the above clutch is disengaged so that the manual force is distributed to the outer ring gear of the reducer to rotate the outer ring gear of the reducer relative to the motor housing. Since the manual force is not transmitted to the motor in this state, drag resistance is not applied to the drive wheel, so that the bicycle can be driven forward easily by the manual force alone.

This bicycle may be arranged such that the input member to which the power transmission element is connected is provided at one end of the axle, the driving motor is provided at the other end of the axle, and the transmission and the reducer are mounted between the input member and the driving motor.

By providing the transmission and the reducer between the input member at one end of the axle and the driving motor at the other end of the axle, since the two planetary gear mechanisms are located closer to each other, it is possible to simplify the structure of the common planetary carrier or the carrier and the member rotatable together with the carrier.

The power transmission element is an endless member connecting the crankshaft of the pedals to the input member of the drive wheel. If the power transmission element is a chain connecting the front and rear sprockets together, the input member is the rear sprocket, i.e. the sprocket of the drive wheel.

Such a bicycle may further include a regeneration unit. In particular, the bicycle may further comprising a one-way clutch for reverse input provided between the sun gear of the transmission and the axle, and a secondary battery, wherein the clutch is a two-way clutch configured such that its engaging direction can be changed by externally operating the clutch, wherein reverse input from the drive wheel can be transmitted to the driving motor by locking the one-way clutch for reverse input and the clutch, thereby allowing the driving motor to produce electricity, whereby the one-way clutch for reverse input and the clutch constitute a regeneration unit which allows the driving motor to generate electricity which can be stored in the secondary battery while reverse input is being produced.

The one-way clutch for reverse input may be any known one-way clutch such as a sprag clutch or a roller clutch. It may for example be a ratchet clutch mechanism.

By providing the one-way clutch for reverse input and using the above two-way clutch as the clutch, while the bicycle is traveling forward while being driven, manual force applied to the pedals is transmitted to the hub through the sprocket of the drive wheel and the transmission, and the assisting driving force from the driving motor is transmitted to the hub through the reducer by keeping the two-way clutch in a position where it can engage while the assisting driving force is being produced. The bicycle is thus driven forward. While the bicycle is being driven, the one-way clutch for reverse input is kept disengaged at all times.

While the bicycle is traveling forward without being driven, and thus reverse input is being produced, the sun gear or one of the sun gears of the transmission is fixed to the axle by the one-way clutch for reverse input, so that the reverse input is transmitted through the planetary carrier to the planetary gears of the reducer. When, in this state, the two-clutch is moved to an engageable position by controlling the two-way clutch from outside, reverse input is transmitted to the motor, so that the motor can generate electricity.

The clutch (two-way clutch) provided between the outer ring gear of the reducer and the motor housing may be any clutch such as a sprag clutch. For example, this clutch may be a roller clutch mechanism.

In particular, the clutch comprises an inner ring having roller clutch cam surfaces on an outer surface of the motor housing, rollers held on the respective roller clutch cam surfaces by a retainer, a cylindrical outer ring provided on an inner surface of the outer ring gear of the reducer, an elastic member biasing the rollers in a first direction in which the rollers engage while driving force is being applied from the driving motor, and a switching device coupled to the retainer, wherein the clutch is configured such that rollers engage in second direction opposite to the first direction by controlling, from outside, the switching device while the bicycle is traveling forward without being driven, and such that while the rollers are engaged in the second direction, reverse input from the drive wheel can be transmitted to the driving motor.

If the above two-way roller clutch is used as the clutch, the roller clutch cam surfaces are preferably formed on the fixed member, i.e. the motor housing. With this arrangement, the engaging direction is easily changeable.

The rollers are preferably biased by the elastic member in the above-described first direction so that the rollers can be engaged in the above-described second direction by controlling the rollers from outside while the bicycle is traveling forward without being driven. This simplifies the structure of the clutch because with this arrangement, it is necessary to change the clutch position only when regeneration is necessary.

The switching device may be operatively couple to the bicycle brake so that the engaging direction of the clutch is changed when the brake is operated.

In a specific arrangement, the above at least one sun gear of the transmission comprises a plurality of sun gears, and the transmission further comprises one-way clutches which are disposed between the respective sun gears of the transmission and the axle, wherein the transmission control mechanism is capable of locking any selected one of the one-way clutches of the transmission to rotationally fix the sun gear of the transmission corresponding to the selected one of the one-way clutches of the transmission, while keeping the other one-way clutch or clutches of the transmission disengaged and thus keeping the other sun gear or gears of the transmission rotatable relative to the axle,

The one-way clutches of the transmission may be any known one-way clutches such as ratchet clutch mechanisms.

The total length of the sun gears in the axial direction of the axle has to be as small as possible because the inner space of the hub is limited. By using ratchet clutches as the one-way clutch for reverse input and the one-way clutches of the transmission, it is possible to arrange the ratchet clutch pawls of the one-way clutch for reverse input and one of the one-way clutches of the transmission at the same axial position, and thus to shorten the total axial length of the sun gears.

If ratchet clutches are used as the one-way clutches of the transmission, the transmission control mechanism may comprise a sleeve rotatably mounted around the axle and is capable of engaging any selected one of the one-way clutches of the transmission, while keeping the other one-way clutch or clutches disengaged, by rotating the sleeve around the axle.

Since the dimension of the space in the hub in the axial direction of the axle is limited, the above transmission control mechanism is preferably used, in which the any of the one-way clutches of the transmission can be selectively engaged by rotating the sleeve around the axle.

In a specific arrangement thereof, the one-way clutches of the transmission each comprise a clutch cam surface formed on one of the corresponding sun gear of the transmission and the axle, and a clutch pawl pivotally mounted to the other of the corresponding sun gear of the transmission and the axle so as to be engageable with the corresponding clutch cam surface by pivoting, wherein the sleeve of the transmission control mechanism includes a cutout at its circumferential portion, and can be rotated around the axle to any of a plurality of positions where the clutch pawls of the one-way clutches of the transmission are radially aligned with the cutout of the sleeve, respectively, and wherein the clutch pawl of any of the one-way clutches of the transmission can pivot and engage the corresponding clutch cam surface when the clutch pawl is radially aligned with the cutout of the sleeve.

Each of the planetary gears of the reducer has two gear portions. This arrangement makes it possible to provide a high speed reduction ratio. But according to the specifications of the power assisted bicycle, the planetary gears of the transmission may each have a single gear portion or more than two gear portions.

The bicycle may further comprise a sprocket and a one-way clutch for the sprocket provided between the sprocket and the planetary carrier of the transmission. The one-way clutch allows only transmission of manual force from the sprocket to the planetary carrier and prevents transmission of reverse input from the drive wheel to the sprocket. With this arrangement, since the chain does not rotate while the bicycle is traveling forward without being driven, driving safety improves.

In still another arrangement, the output shaft and the axle are coaxially connected together, and are supported so as to be rotatable relative to each other by a bearing. This arrangement improves rigidity of the axle and the driving motor.

In order to provide the bicycle with the regenerative braking feature, the transmission may further comprise a first clutch which is changeable between an engaged position where the sun gear of the transmission is rotationally fixed to the axle through the first clutch of the transmission and a disengaged position where the sun gear of the transmission is allowed to rotate relative to the axle, both while manual force is being applied from the pedals and while reverse input is being applied from the drive wheel.

In particular, the bicycle comprises a drive wheel having a hub and an axle, a transmission, a reducer and a driving motor which are mounted in the hub so as to be aligned with and in juxtaposition with each other in an axial direction of the axle, pedals, a power transmission element, wherein the transmission is capable of transmitting manual driving force applied to the transmission through the pedals and the power transmission element to the drive wheel, wherein the transmission comprises a planetary gear mechanism comprising at least one sun gear, planetary gears meshing with the sun gear, a planetary carrier supporting the planetary gears, and an outer ring gear meshing with the planetary gears, and a transmission control mechanism changeable between a first position where the sun gear of the transmission is rotationally fixed to the axle and a second position where the sun gear of the transmission is rotatable relative to the axle, wherein the reducer comprises a planetary gear mechanism comprising at least one sun gear, planetary gears meshing with the sun gear of the reducer, and supported by the planetary carrier of the transmission or by a member configured to rotate in unison with the planetary carrier of the transmission, and an outer ring gear meshing with the planetary gears of the reducer, wherein the driving motor is mounted in a motor housing, wherein a clutch is provided between the outer ring gear of the reducer and the motor housing, wherein the transmission further comprises a first clutch which is changeable between an engaged position where the sun gear of the transmission is rotationally fixed to the axle through the first clutch of the transmission and a disengaged position where the sun gear of the transmission is allowed to rotate relative to the axle, both while manual force is being applied from the pedals and while reverse input is being applied from the drive wheel, wherein the transmission control mechanism is capable of moving the first clutch of the transmission between the engaged position and the disengaged position, whereby manual force from the pedals is transmitted through the power transmission element to the planetary carrier of the transmission, and then to the drive wheel at a one-to-one or higher speed ratio, wherein reverse input from the drive wheel can be transmitted to the driving motor, thereby allowing the driving motor to produce electricity, and wherein the bicycle further includes a regeneration unit for storing electricity produced by the driving motor while reverse input is being applied to the driving motor in a secondary battery.

With this arrangement, while the bicycle is traveling forward while being driven, manual force from the power transmission element is transmitted to the hub through the transmission, while the driving force from the driving motor is transmitted to the hub through the reducer and the transmission. The bicycle is thus driven forward. While the bicycle is traveling forward without being driven, the reverse input is transmitted from the hub to the driving motor through the transmission and the reducer. The driving motor can thus generate electricity. This is possible because the first clutch of the transmission can be changed between the engaged position where the sun gear of the transmission is rotationally fixed to the axle and the disengaged position where the sun gear is rotatable relative to the axle, both while driving force from the motor is being applied and while reverse input is being applied.

When reverse input from the drive wheel is transmitted to the driving motor, a separate known control mechanism may be used to selectively generate and not generate electricity from the driving motor. For example, such a control mechanism may be connected to a bicycle brake lever so that the motor generates electricity when the brake lever is operated.

With this arrangement, the transmission may further comprise a second clutch disposed between the sun gear of the transmission and the planetary carrier of the transmission, and movable between an engaged position where the sun gear of the transmission and the carrier of the transmission are rotationally fixed to each other through the second clutch of the transmission and a disengaged position where the sun gear of the transmission and the carrier of the transmission are kept rotatable relative to each other through the second clutch of the transmission.

With this arrangement, torque applied to the planetary carrier of the transmission from the power transmission element can be transmitted to the hub at a one-to-one speed ratio.

Torque is transmitted at the one-to-one speed ratio when the sun gear of the transmission is rotationally fixed to the planetary carrier of the transmission by means of the second clutch of the transmission, both while driving force is being applied and while reverse input is being applied. Since the second clutch of the transmission is disposed between the sun gear of the transmission and the planetary carrier of the transmission, the transmission control mechanism used to change the position of the first clutch of the transmission can also be used to change the position of the second clutch of the transmission, which is located close to the first clutch. Thus it is possible to easily change the positions of these two clutches with the single transmission control mechanism.

In any of the above arrangements, each of the planetary gears of the transmission may have a plurality of gear portions, wherein said at least one sun gear of the transmission comprises sun gears which are equal in number to the number of the gear portions of each planetary gear of the transmission and which mesh with the respective gear portions of each planetary gear of the transmission, and wherein any one of the sun gears of the transmission can be selectively rotationally fixed to the axle while the bicycle is being driven, thereby providing one of a plurality of different speed increase ratios. This relatively simple transmission structure provides a plurality of increases ratios.

In this arrangement, the first clutch of the transmission may be disposed every one of the sun gears of the transmission and the axle so that any selected one of the sun gears of the transmission can be rotationally fixed to the axle by controlling the transmission control mechanism so as to engage the corresponding first clutch of the transmission.

The second clutch of the transmission is preferably disposed between the planetary carrier of the transmission and one of the sun gears which meshes with one of the gear portions of each planetary gear of the transmission which carries the smallest number of teeth.

In any of the above arrangements, the power transmission element and the planetary carrier of the transmission may be connected together through an input member provided at one end of the axle and on one side of the hub, wherein the driving motor is provided at the other end of the axle and on the other side of the hub, and wherein the transmission and the reducer are mounted between the input member and the driving motor.

With this arrangement, since the planetary carrier of the transmission and the planetary carrier of the reducer are arranged close to each other, it is possible to more easily omit one of the planetary carriers and use the other planetary carrier both for the transmission and the reducer. In this arrangement too, the power transmission element is an endless member connecting the crankshaft of the pedals to the input member of the drive wheel, and if the power transmission element is a chain connecting the front and rear sprockets together, the input member is the rear sprocket, i.e. the sprocket of the drive wheel.

The disposed between the outer ring gear of the reducer and the motor housing may be a two-way clutch of which the engaging direction relative to the motor housing and the outer ring gear of the reducer is changeable.

By providing the two-way clutch between the outer ring gear of the reducer and the motor housing, although the driving force from the driving motor is transmitted to the planetary carrier, while the bicycle is being driven by manual force applied to the pedals alone with no assisting force from the motor, the manual force is transmitted to the planetary gears of the reducer but not to the output shaft of the driving motor because in this state, the above clutch is disengaged so that the manual force is distributed to the outer ring gear of the reducer to rotate the outer ring gear of the reducer relative to the motor housing. Since the manual force is not transmitted to the motor in this state, drag resistance is not applied to the drive wheel, so that the bicycle can be driven forward easily by the manual force alone.

By engaging the two-way clutch while the bicycle is traveling forward without being driven, i.e. while reverse input is being applied from the drive wheel, the reverse input is transmitted to the motor, so that the motor can generate electricity.

Like the above-described switching device, the two-way clutch may be configured to be engaged or disengaged when the brake is applied. Four example, the two-way clutch may be configured to be engaged when the brake is applied while reverse input is being produced so that the reverse input is transmitted to the driving motor and the driving motor can generate electricity.

The two-way clutch may be any know clutch mechanism such as a roller clutch.

If a roller clutch is used as the two-way clutch, the roller clutch cam surfaces are preferably formed on the fixed member, i.e. the motor housing. With this arrangement, the engaging direction is easily changeable. The rollers are preferably biased by the elastic member in a direction in which the rollers engage while driving force is being applied from the motor so that the rollers can be engaged in the opposite direction by controlling the rollers from outside while the bicycle is traveling forward without being driven. This simplifies the structure of the clutch because with this arrangement, it is necessary to change the clutch position only when regeneration is necessary.

The first clutch of the transmission may be any know one-way clutch such as a sprag clutch or a roller clutch. For example, it may be a ratchet clutch.

The first clutch of the transmission may comprise first clutch pawls provided on the outer surface of the axle and first clutch cam surfaces which are formed on the inner surface of the sun gear of the transmission and with which the first clutch pawls are engageable, both while driving force is being applied and while reverse input is being applied. The first clutch cam surfaces of the transmission are preferably formed on the inner surface of the sun gear of the transmission because the inner surface of the sun gear has a larger diameter than the outer surface of the axle, so that the first cam surfaces can be formed in a larger number on the inner surface of the sun gear than on the outer surface of the axle, and the larger the number of cam surfaces, the more quickly the first clutch pawls can engage one of the cam surfaces.

The second clutch of the transmission may be any known one-way clutch such as a sprag clutch or a roller clutch. For example, it may be a ratchet clutch.

The second clutch of the transmission may comprise second clutch pawls provided on the outer surface of the sun gear of the transmission, and second clutch cam surfaces which are formed on the inner surface of the planetary carrier of the transmission and with which the second clutch pawls are engageable, both while driving force is being applied and while reverse input is being applied. The second clutch cam surfaces of the transmission are preferably formed on the inner surface of the planetary carrier of the transmission because the inner surface of the planetary has a larger diameter than the outer surface of the sun gear of the transmission, so that the second cam surfaces can be formed in a larger number on the inner surface of the planetary carrier than on the outer surface of the sun gear, and the larger the number of cam surfaces, the more quickly the second clutch pawls can engage one of the cam surfaces.

By using the ratchet clutches as the first and second clutches of the transmission, the clutches can engaged, both while driving force is being applied and while reverse input is being applied, and can be easily changed between engageable and non-engageable positions both when driving force is applied and when reverse input is applied.

If ratchet clutches are used as the first and second clutches of the transmission, the transmission control mechanism may comprises a sleeve formed with cutouts and mounted around the axle so as to be rotatable relative to the axle, and a second clutch switching member configured to be moved in an axial direction of the axle when the sleeve rotates around the axle, wherein the sleeve is rotatable between a first position where the first clutch of the transmission is engaged and a second position where the first clutch of the transmission is not engaged, both while driving force is being applied and while reverse input is being applied, and wherein the second clutch switching member is movable in the axial direction of the axle between a first position where the second clutch of the transmission is engaged and a second position where the second clutch of the transmission is not engaged, both while driving force is being applied and while reverse input is being applied.

Since the dimension of the inner space of the hub in the axial direction of the hub is limited, the above arrangement, i.e. the arrangement in which the first and second clutches of the transmission are changed over by turning the sleeve of the transmission control mechanism around the axle, is preferable.

In this arrangement, the transmission control mechanism may further comprise a control member coupled to the sleeve and protruding from the hub, wherein the sleeve can be rotated around the axle by operating the control member.

The sleeve and/or the control member of the transmission control mechanism may be biased by elastic members such as springs to reduce the manual force applied to these members.

In one arrangement, the sleeve is biased by a first elastic member in a first circumferential direction of the axle, the second clutch switching member is biased by a second elastic member in a first axial direction of the axle, the second clutch switching member is configured to be moved in a second axial direction of the axle which is opposite to the first axial direction against the force of the second elastic member when the sleeve is rotated in a second circumferential direction opposite to the first circumferential direction against the force of the first elastic member, and the second clutch switching member is further configured to be moved in the first axial direction under the force of the second elastic member when the sleeve is rotated in the first circumferential direction under the force of the first elastic member.

In this arrangement, the sleeve is biased by the first elastic member in the first circumferential direction of the axle. When the sleeve is turned in the opposite direction against the force of the first elastic member, the second clutch switching member is moved in one axial direction of the axle against the force of the second elastic member. When the force to turn the sleeve in the opposite direction is removed or reduced, the sleeve rotates in the first direction under the force of the first elastic member back to its original position, while the second clutch switching member is moved in the opposite axial direction under the force of the second elastic member back to its original position.

The sleeve and the second clutch switching member, of the transmission have to be coupled together such that they rotate in unison, and the second clutch switching member also moves in either axial direction when the sleeve rotates. In one exemplary arrangement for achieving this purpose, the sleeve has on its inner surface a guide portion inserted in an axial slit formed in the outer surface of the sleeve and also inserted in a guide groove formed in the outer surface of a stationary member disposed between the sleeve and the second clutch switching member.

In this arrangement, when the sleeve is turned around the axle, one side wall of the slit of the sleeve contacts the guide portion of the second clutch switching member, thus allowing the second switching member to rotate together with the sleeve. The guide groove of the stationary member has an axially inclined tapered surface. When the second clutch switching member is rotated by the sleeve, its guide portion contacts and is guided by the axially inclined tapered surface of the guide groove of the stationary member. Thus, the second clutch switching member is moved in the axial direction while rotating. The slit of the sleeve has to have an axial length sufficient for the second clutch to be able to move axially by a required distance.

Regarding the first clutch of the transmission, the transmission may further comprise clutch shafts supported by the axle and pivotally supporting the respective first clutch pawls of the transmission so as to be pivotable relative to the axle, the first clutch pawls of the transmission each having first and second ends, and elastic members biasing the respective first clutch pawls of the transmission in a direction in which the first ends thereof can engage any of the first clutch cam surfaces of the transmission, wherein when the sleeve of the transmission control mechanism is in said second position, the sleeve abuts the second ends of the respective first clutch pawls of the transmission at its portions other than the cutouts, thereby preventing the first clutch pawls of the transmission from pivoting until their first ends engage any of the first clutch cam surfaces of the transmission, both while driving force is being applied and while reverse input is being applied, and when the sleeve is in said first position, the first clutch pawls are allowed to pivot until the first ends thereof engage selected ones of the first clutch cam surfaces with the second ends thereof engaged in the respective cutouts of the sleeve, both while driving force is being applied and while reverse input is being applied.

In this arrangement, regarding the second clutch of the transmission, the transmission may further comprise clutch shafts supported by the sun gear of the transmission and pivotally supporting the respective second clutch pawls of the transmission so as to be pivotable relative to the sun gear, the second clutch pawls of the transmission each having first and second ends, and elastic members biasing the respective second clutch pawls of the transmission in a direction in which the first ends thereof can engage any of the second clutch cam surfaces of the transmission, and wherein when the second clutch switching member of the transmission control mechanism is in said second position, the second clutch switching member abuts the second ends of the respective second clutch pawls of the transmission, thereby preventing the second clutch pawls of the transmission from pivoting until their first ends engage any of the second clutch cam surfaces of the transmission, both while driving force is being applied and while reverse input is being applied, and when the second clutch switching member is in said first position, the second clutch switching member is spaced from the second ends of the second clutch pawls, whereby the second clutch pawls are allowed to pivot until the first ends thereof engage selected ones of the second clutch cam surfaces, both while driving force is being applied and while reverse input is being applied.

The cutouts of the outer surface of the sleeve of the transmission control mechanism may each have first and second tapered surfaces at respective ends thereof with respect to the circumferential direction of the axle, wherein when in order to change the speed ratio, the sleeve is rotated in either of the circumferential directions of the axle to disengage the first clutch pawls of the transmission from selected ones of the first clutch cam surfaces of the transmission, the second ends of the first clutch pawls of the transmission are configured to contact the first tapered surfaces or the second tapered surfaces of the corresponding first clutch cam surfaces of the transmission.

With this arrangement, since each cutout has the first and second tapered surfaces at the respective ends thereof with respect to the circumferential direction of the axle, when in order to change the speed ratio, the sun gear is engaged with or disengaged from the axle by rotating the sleeve, the second ends of the first clutch pawls of the transmission are configured to contact the first tapered surfaces or the second tapered surfaces of the corresponding first clutch cam surfaces of the transmission according to the rotational direction of the sleeve. In other words, the second ends of the clutch pawls contact one of the first and second tapered surfaces. Thus, both during upshifting (e.g. from first speed ratio to second speed ratio), where the sleeve is turned in direction around the axle, and during downshifting (e.g. from second speed ratio to first speed ratio), where the sleeve is turned in the opposite direction, one of the first and second tapered surfaces of each cutout serves to increase the force tending to disengaging each first clutch pawl of the transmission from the first clutch cam surface of the transmission. This makes smooth gear shifting possible.

Each of the planetary gears of the reducer may include two gear portions each carrying teeth which are different in number from the number of teeth of the other gear portion to maximize the speed reduction ratio. But according to the specifications of the power assisted bicycle, the planetary gears of the reducer may each have one or more than two gear portions.

A one-way clutch may be mounted between the input member to which the power transmission element is connected and the planetary carrier of the transmission such that manual force from the power transmission and the input member are transmitted to the planetary carrier of the transmission but reverse input from the drive wheel is not transmitted to the input member and the power transmission element. This arrangement improves drive safety because while the bicycle is traveling forward without being driven, the power transmission element, typically a chain, does not rotate.

In a preferred arrangement, the output shaft and the axle may be coaxially connected together, and be supported so as to be rotatable relative to each other by a bearing. This arrangement improves rigidity of the axle and the driving motor.

## ADVANTAGES OF THE INVENTION

The present invention is directed to an arrangement in which the reducer, electric motor and transmission are mounted in juxtaposition with each other along the axis of the axle, a single planetary carrier is used both as the carrier of the transmission and the carrier of the reducer. Thus, it is possible to reduce the axial dimension of the entire assembly of the above three mechanisms, which in turn makes it possible to increase the available difference between the highest and lowest speed ratios and the available number of speed ratios.

By providing the clutch between the outer ring gear of the reducer and the motor housing, although driving force from the driving motor is transmitted to the planetary carrier, while the bicycle is being driven by manual force only without the assisting force from the motor, the manual force is transmitted through the sprocket and the planetary carrier to the planetary gears of the reducer but not to the output gear of the driving motor because in this state, the above clutch is disengaged, and the outer ring gear of the reducer is freely rotatable relative to the motor housing, so that the manual force transmitted to the planetary gears is distributed to the outer ring gear. This prevents drag resistance of the motor from being applied to the drive wheel while the bicycle is being driven by manual force alone with no assisting force from the motor. The bicycle can thus be easily driven by the manual force alone.

## BRIEF DESCRIPTION OF THE DRAWINGS

Fig. 1 is a sectional view of a rear hub according to a first embodiment of the present invention.
Fig. 2 is a sectional view taken along line A-A of Fig. 1, showing the state while a driving motor is being driven.
Fig. 3 is a sectional view taken along line A-A of Fig. 1, showing the state while the bicycle is traveling forward driving by manual force alone (with no assisting force).
Fig. 4 is a sectional view taken along line A-A of Fig. 1, showing the state during regenerative braking.
Fig. 5 is a vertical sectional view of a rear hub according to a second embodiment of the present invention, in which the one-to-one speed ratio is selected.
Fig. 6A is a sectional view taken along line A-A of Fig. 5, in which the one-to-one speed ratio is selected.
Fig. 6B is a sectional view taken along line B-B of Fig. 5, in which the one-to-one speed ratio is selected.
Fig. 6C is a sectional view taken along line C-C of Fig. 5, in which the one-to-one speed ratio is selected.
Fig. 7 is a vertical sectional view of the rear hub of the second embodiment, in which the first speed increase ratio is selected.
Fig. 8A is a sectional view taken along line A-A of Fig. 7, in which the first speed increase ratio is selected.
Fig. 8B is a sectional view taken along line B-B of Fig. 7, in which the first speed increase ratio is selected.
Fig. 8C is a sectional view taken along line C-C of Fig. 7, in which the first speed increase ratio is selected.
Fig. 9 is a vertical sectional view of the rear hub of the second embodiment, in which the second speed increase ratio is selected.
Fig. 10A is a sectional view taken along line A-A of Fig. 9, in which the second speed increase ratio is selected.
Fig. 10B is a sectional view taken along line B-B of Fig. 9, in which the second speed increase ratio is selected.
Fig. 10C is a sectional view taken along line C-C of Fig. 9, in which the second speed increase ratio is selected.
Fig. 11 is a vertical sectional view of the rear hub of the second embodiment while the bicycle is traveling forward without being driven (at the second speed increase ratio).
Fig. 12A is a sectional view taken along line A-A of Fig. 11 while the bicycle is traveling forward without being driven (at the second speed increase ratio).

Fig. 12B is a sectional view taken along line B-B of Fig. 11while the bicycle is traveling forward without being driven (at the second speed increase ratio).

Fig. 12C is a sectional view taken along line C-C of Fig. 11while the bicycle is traveling forward without being driven (at the second speed increase ratio).

Figs. 13(a) to 13(c) are detailed plan views of a second clutch switching member of the transmission.

Fig. 14 is a sectional view taken along line D-D of Fig. 11, showing the state in which the bicycle is being driven by the motor.

Fig. 15 is a sectional view taken along line D-D of Fig. 11, showing the state in which the bicycle is traveling forward by being driven by manual force alone (with no assisting force).

Fig. 16 is a sectional view taken along line D-D of Fig. 11, showing the state during regenerative braking.

Fig. 17 is a side view of the power assisted bicycle according to this invention.

BEST MODE FOR EMBODYING THE INVENTION

(First Embodiment)

The first embodiment of the present invention is described with reference to the drawings. The power-assisted bicycle of this embodiment includes a driving motor 15 mounted in a hub 1 of a rear wheel, which is a drive wheel 45 (this hub is hereinafter referred to as "rear hub 1"), and is called a rear hub-motor type power-assisted bicycle.

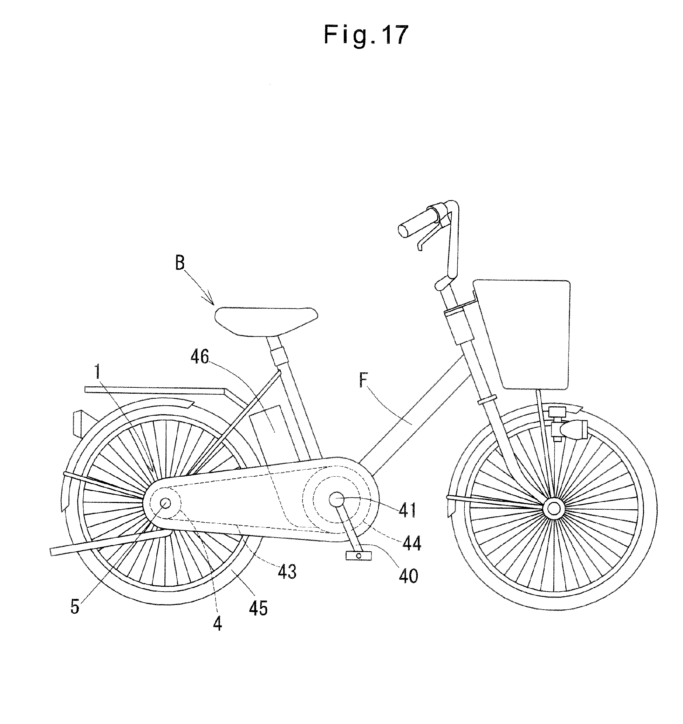

When manual force is applied to the pedals 40 of the bicycle shown in Fig. 17, the manual force can be transmitted to the rear wheel as a driving force through the crankshaft 41 and a power transmission element such as a chain 43 connecting a front sprocket 44 to a sprocket 4 for the rear wheel (hereinafter referred to as the "rear sprocket 4").

Driving force generated from the driving motor 15 can be transmitted, to the rear wheel through e.g. a reducer 16 in the hub. Numeral 46 in Fig. 17 indicates a secondary battery as a power source of the driving motor 15.

While the bicycle is traveling forward without being driven, reverse input from the rear wheel is transmitted through the reducer 16 (in this case, the reducer 16 increases, rather than reduces, speed) to the driving motor 15. The motor 15 thus generates electricity, which is stored in the secondary battery 46 by means of a regeneration unit, which is provided in the rear hub 1 or near the battery 46.

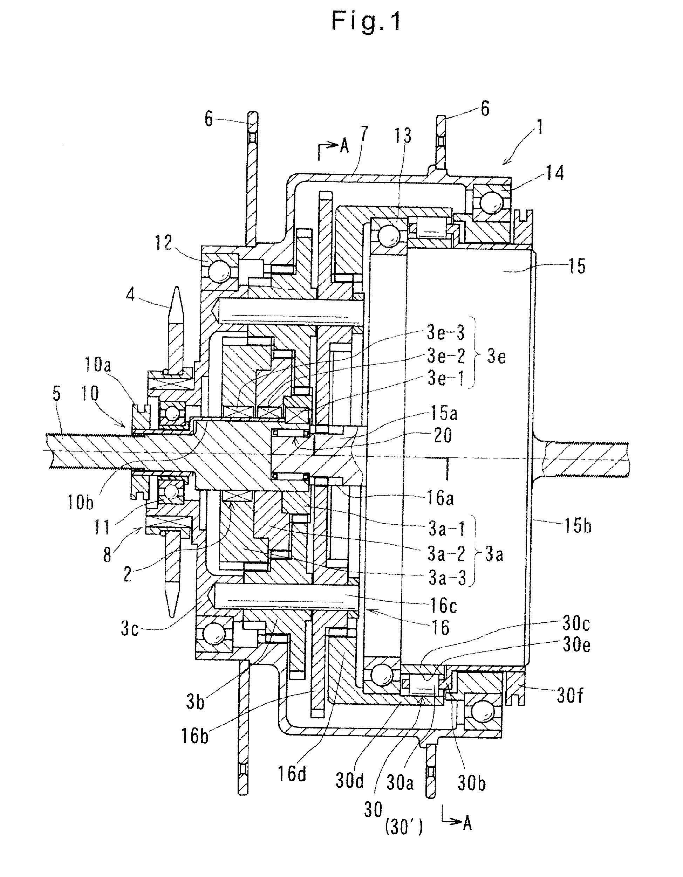

As shown in Fig. 1, the rear hub 1 includes a hub case 7 which is coaxial with the axle 5 of the rear wheel, and a transmission 3, the reducer 16 and the driving motor 15, which are all mounted in the hub case 7. The transmission 3 is a planetary gear mechanism which can increase speed in three stages. Numeral 6 indicates a hub flange integral with the rear wheel.

The transmission 3 includes a sun gear or gears 3a which are mounted around the axle 5, which is stationary, through a one-way clutch or clutches 3e. In the embodiment, the transmission 3 includes three sun gears, i.e. first sun gear 3a-1, second sun gear 3a-2 and third sun gear 3a-3 which can be selectively coupled to the axle 5 through respective three one-way clutches, i.e. first one-way clutch 3e-1, second one-way clutch 3e-2 and third one-way clutch 3e-3.

A one-way clutch 2 for reverse input is provided between the third sun gear 3a-3 of the transmission 3 and the axle 5.

In this embodiment, the first to third one-way clutches 3e-1 to 3e-3 and the one-way clutch 2 for reverse input are all ratchet clutches.

Each of the first to third one-way clutches 3e-1 to 3e-3 and the one-way clutch 2 for reverse input includes clutch pawls which can be selectively brought into and out of engagement with clutch cam surfaces formed on the outer periphery of the axle 5. The clutch pawls are each biased by an elastic member toward the erect position where the pawl engages one of the clutch cam surfaces.

Since the interior space of the rear hub 1 is limited, it is necessary to minimize the total axial length of the sun gears 3a of the transmission. In this embodiment, since the one-way clutch 2 for reverse input and the one-way clutches 3e of the transmission are all ratchet clutches, it is possible to arrange the clutch pawl of the one-way clutch 2 for reverse input and the clutch pawl of one of the one-way clutches 3e of the transmission (third one-way clutch 3e-3 in this embodiment) in the same axial position. This makes it possible to minimize the total axial length of the sun gears 3a of the transmission.

The transmission 3 further includes planetary gears 3b each having three gear portions carrying different numbers of gear teeth and meshing with the first to third sun gears 3a-1 to 3a-3, respectively, a planetary carrier 3c supporting the planetary gears 3b, and an outer ring gear 3d meshing with the planetary gears 3b and integral with the hub case 7.

But the outer ring gear 3d may be instead a member separate from the hub case 7 and rotationally fixed to the hub case 7.

Bearings 11 and 12 are provided between the planetary carrier 3c of the transmission and the axle 5 and between the hub case 7 and the planetary carrier 3c of the transmission, respectively, to allow relative rotation between the planetary carrier 3c of the transmission and the axle 5 and between the hub case 7 and the planetary carrier 3c of the transmission.

Another bearing 14 is provided between a motor housing 15b supporting the driving motor 15 and the hub case 7, allowing relative rotation between the motor housing 15b and the hub case 7.

In the embodiment, the outer ring gear 3d of the transmission meshes with one of the three gear portion having the second largest number of gear teeth, of each planetary gear 3b of the transmission. While the outer ring gear 3d may be brought into meshing engagement with a different gear portion of each planetary gear, the arrangement of the embodiment is preferably because with this arrangement, it is possible to maximize the difference between the highest and lowest speed increase ratios.

A one-way clutch 8 for the rear sprocket is provided between the rear sprocket 4 and the planetary carrier 3c, which is positioned so as to transmit manual force applied to the pedals 40 to the planetary carrier 3c but not to transmit reverse input from the planetary carrier 3c to the rear sprocket 4. Thus, while the bicycle is traveling forward without being driven, the chain does not move, which increases safety. The one-way clutch 8 for the rear sprocket may be a well-known one-way clutch.

The bicycle further includes a transmission control mechanism 10. By operating the transmission control mechanism 10 while the bicycle is being driven, any one of the sun gears 3a of the transmission (i.e. first to third sun gears 3a-1 to 3a-3) can be selectively fixed to the axle 5. In particular, by operating the transmission control mechanism 10, it is possible to selectively lock up any one of first to third one-way clutches 3e-1 to 3e-3 while the bicycle is being driven, and thus to rotationally fix the corresponding one of the first to third sun gears 3a-1 to 3a-3 to the axle 5, while keeping the other two sun gears rotatable relative to the axle 5.

When any one (e.g. the first sun gear 3a-1) of the sun gears of the transmission is fixed to the axle 5 while keeping the other two sun gears (e.g. the second and third sun gears 3a-2 and 3a-3) rotatable relative to the axle 5, the rotation of the rear sprocket 4 is transmitted to the carrier 3c and after its speed has been increased, transmitted to the hub case 7 (outer ring gear 3d of the transmission).

When the first sun gear 3a-1 of the transmission is fixed to the axle 5, the speed increase ratio from the planetary carrier 3c of the transmission to the outer ring gear 3d of the transmission is given by:

$$[(a \times b)/(c \times d)] + 1$$

where a is the number of teeth of the first sun gear 3a-1 of the transmission, b is the number of teeth of the gear portion of each planetary gear 3b of the transmission which meshes with the second sun gear 3a-2 of the transmission, c is the number of teeth of the gear portion of each planetary gear 3b of the transmission which meshes with the first sun gear 3a-1 of the transmission, and d is the number of teeth of the outer ring gear 3d of the transmission. In this state, the second and third sun gears 3a-2 and 3a-3 are idling and not involved in the transmission of torque.

When the second sun gear 3a-2 of the transmission is fixed to the axle 5, the speed increase ratio from the planetary carrier 3c of the transmission to the outer ring gear 3d of the transmission is given by:

$$(a + d)/d$$

where a is the number of teeth of the second sun gear 3a-2 of the transmission, and d is the number of teeth of the outer ring gear 3d of the transmission.

When the third sun gear 3a-3 of the transmission is fixed to the axle 5, the speed increase ratio from the planetary carrier 3c of the transmission to the outer ring gear 3d of the transmission is given by:

$$[(a \times b)/(c \times d)] + 1$$

where a is the number of teeth of the third sun gear 3a-1 of the transmission, b is the number of teeth of the gear portion of each planetary gear 3b of the transmission which meshes with the second sun gear 3a-2 of the transmission, c is the number of teeth of the gear portion of each planetary gear 3b of the transmission which meshes with the third sun gear 3a-3 of the transmission, and d is the number of teeth of the outer ring gear 3d of the transmission.

In order to selectively lock up any one of the one-way clutches 3e, i.e. first to third one-way clutches 3e-1 to 3e-3, a sleeve 10b of the transmission control mechanism 10, which is mounted around the axle 5. is rotated about the axle 5. The sleeve 10b can be rotated by operating a control member 10a provided at the end of the axle 5.

The sleeve 10b has a cutout at its circumferential portion. In order to lock up any selected one of the one-way clutches 3e of the transmission, the sleeve 10b is turned about the axle 5 until its cutout radially aligns with the clutch cam surface of the transmission that corresponds to the selected one-way clutch 3e so that only the clutch pawl of the selected one-way clutch passes through the cutout of the sleeve and engages the corresponding clutch cam surface. In this state, the sleeve 10b prevents the clutch pawls of the other one-way clutches from engaging the corresponding clutch cam surfaces.

In this embodiment, the speed ratio is changed by selectively locking up one of the first to third one-way clutches 3e-1 to 3e-3 by turning the sleeve 10b of the transmission control mechanism 10 until the ratchet clutch pawl of the selected one-way clutch engages the corresponding clutch cam surface. But instead, a known bicycle transmission may be used.

The driving motor 15 is axially aligned with the transmission 3 and the reducer 16. The output of the driving motor 15 is transmitted, after reducing its speed in the reducer 16, to the planetary carrier 3c of the transmission.

Then the motor output is transmitted from the planetary carrier 3c of the transmission to the hub case 7 after increasing its speed in the transmission 3. The speed increase ratio varies depending on which of the first to third one-way clutches 3e-1 to 3e-3 is locked up by the transmission control mechanism 10.

The reducer 16 includes a sun gear 16a mounted around the output shaft 15a of the driving motor 15, planetary gears 16b each having two gear portions meshing with the sun gear 16a, an outer ring gear 16d rotatably supported by the motor housing 15b through a bearing 13 and a clutch 30, and a planetary carrier supporting the planetary gears 16b of the reducer.

The planetary carrier 3c of the transmission 3 also serves as the planetary carrier of the reducer. Thus, the planetary gears 3b of the transmission and the planetary gears 16b of the reducer are supported by the planetary carrier 3c of the transmission through common shafts 16c. By using the planetary carrier of the transmission also as the planetary carrier of the reducer, it is possible to reduce the axial dimension of the entire device.

In this embodiment, the output shaft 15a of the driving motor 15 is connected to the axle 5 so as to be coaxial with the axle 5 and rotatable relative to the axle 5 about their common axis by means of a bearing 20. By supporting the output shaft 15a of the driving motor 15 so as to be rotatable relative to the axle 5 by means of the bearing 20, the rigidity of the axle 5 and the driving motor 15 increases.

In this embodiment, the clutch 30 is a two-way roller clutch 30'.

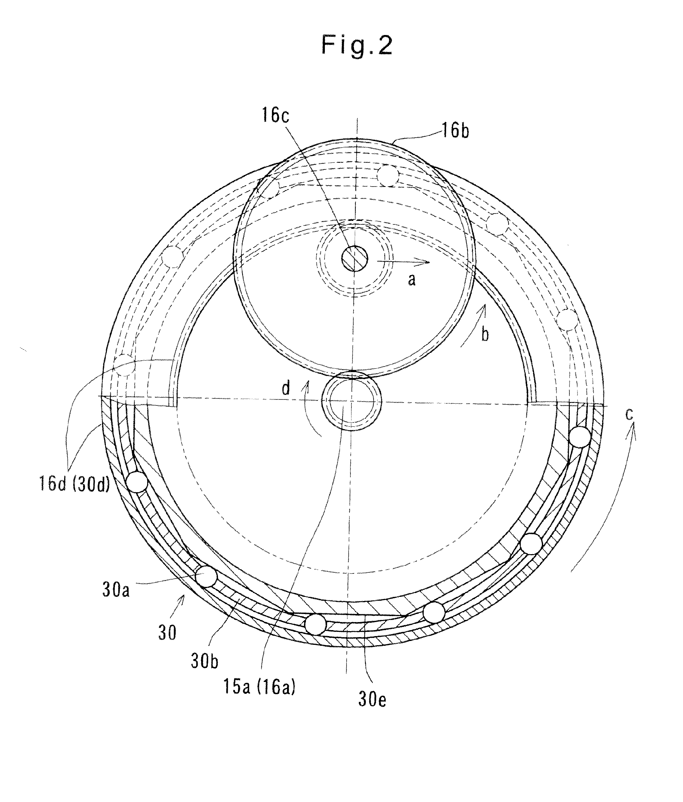

The two-way roller clutch 30' includes an inner ring 30c having roller clutch cam surfaces 30e formed on the outer surface of the motor housing 15b, rollers 30a retained by a retainer 30b so as to be located on the respective roller cam surfaces 30e, and a cylindrical outer ring 30d having an inner surface which is also the inner surface of the outer ring gear 16d of the reducer. The rollers 30a are biased by an elastic member, not shown, in a direction to engage when driving force is applied from the driving motor 15 (i.e. counterclockwise in Fig. 2).

The speed reduction ratio of the driving force from the driving motor 15 is given by:

$$[(a \times b)/(c \times d)] + 1$$

where a is the number of teeth of the gear portion of each planetary gear 16b of the reducer that meshes with the sun gear 16a of the reducer; b is the number of teeth of the outer ring gear 16d of the reducer; c is the number of teeth of the sun gear 16a of the reducer; and d is the number of teeth of the gear portion of each planetary gear 16b of the reducer that meshes with the outer ring gear 16d of the reducer. The driving force from the driving motor 15 can be transmitted to the planetary carrier 3c of the transmission through the sun gear 16a of the reducer because the outer ring gear 16d of the reducer is locked in position around the motor housing 15b by means of the clutch 30.

In Fig. 2, the arrow a indicates the direction in which the planetary carrier 3c of the transmission is rotated by the driving motor 15; the arrow b indicates the direction of rotation of the planetary gears 16b of the reducer when the carrier 3c is being rotated by the motor in the direction of the arrow a; the arrow c indicates the direction in which the outer ring gear 16d is locked up around the motor housing 15b by the clutch 30; and the arrow d indicates the direction of rotation of the output shaft 15a.

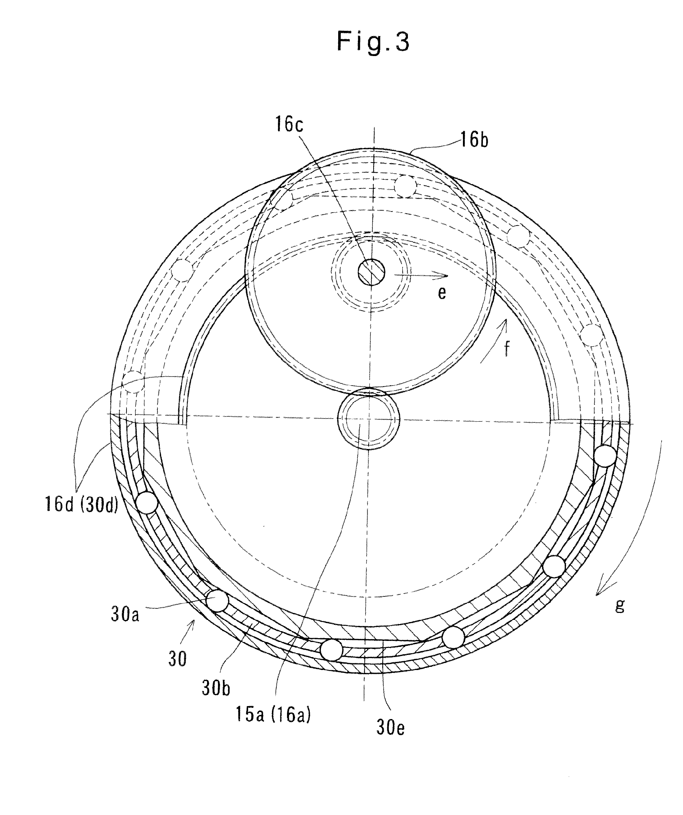

While the driving motor 15 is producing no driving force (assisting force), as shown in Fig. 3, manual force applied to the pedals 40 and reverse input from the drive wheel 45 are transmitted to the planetary gears 16b of the reducer through the planetary carrier 3c of the transmission.

In Fig. 3, the arrows e and f indicate the respective directions in which the planetary carrier 3c of the transmission and each planetary gear 16b of the reducer rotate under manual force applied to the pedals 40 or reverse input from the drive wheel 45 with no driving force from the driving motor 15, and the arrow g indicates the direction in which the outer ring gear 16 of the reducer can rotate around the motor housing 15b.

In this state, since the rotational direction of the outer ring gear 16d of the transmission (direction of torque) is opposite to its rotational direction while the assisting force is being applied, the clutch 30 does not engage. The outer ring gear 16d of the reducer is thus freely rotatable (in the direction of the arrow g) around the motor housing 15b, so that no torque is transmitted to the driving motor 15. That is, the manual force applied to the pedals is never transmitted to the output shaft 15a of the driving motor 15. The bicycle can thus move forward without encountering drag resistance from the motor.

While the bicycle is traveling forward without being driven, reverse input is transmitted from the drive wheel 45 to the planetary gears 3b of the transmission through the hub case 7. In this state, i.e. while reverse input is being produced, the one-way clutch 2 for reverse input, which is mounted between the third sun gear 3a-3 of the transmission and the axle 5, locks up, fixing the third sun gear 3a-3 of the transmission to the axle 5.

Thus, reverse input from the drive wheel 45 is reduced in speed in the transmission 3 and transmitted to the planetary carrier 3c of the transmission. The reverse input is then increased in speed in the reducer 16 and transmitted to the driving motor 15, so that the motor 15 can now generate electricity.

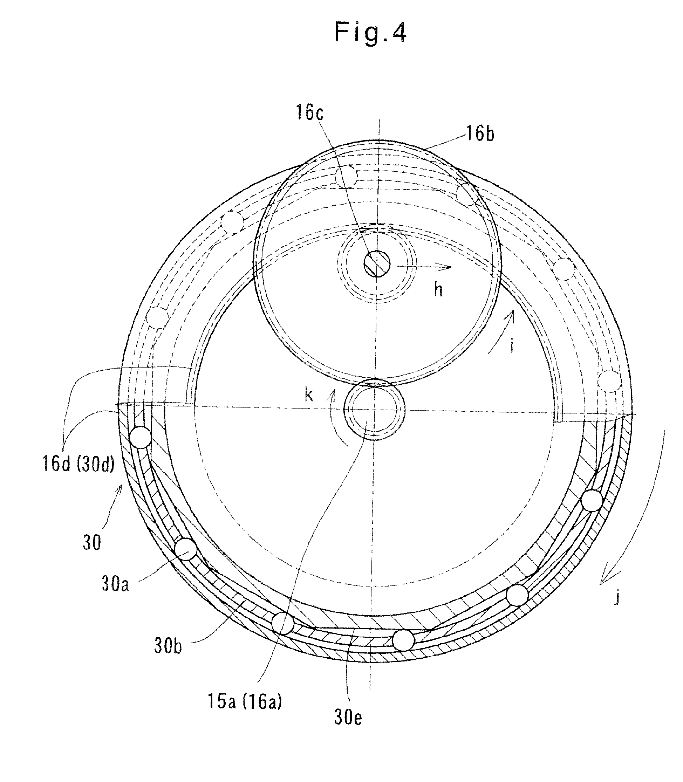

While reverse input is being produced, by operating a switching device 30f coupled to the retainer 30b to bias the rollers 30a clockwise in Fig. 4 from outside the axle 5, the clutch 30 is moved to an engageable position.

The switching device 30f is coupled to a brake lever through a wire (both not shown). When the brake lever is operated while the bicycle is traveling forward without being driven, the force from the brake lever is transmitted to the switching device 30f through the wire, and the switching device 30f rotates clockwise in Fig. 2 together with the retainer 30b against the force of the elastic member (not shown) biasing the retainer in the direction in which the clutch 30 becomes engageable while the bicycle is being driven, to the position where the clutch 30 is engageable while reverse input is being produced (Fig. 4). When the brake lever is released, the retainer 30b, now free of the external force from the brake lever, is biased by the elastic member to the position where the clutch 30 is engageable while the bicycle is being driven. However, when the motor 15 is generating electricity under the reverse input, simply releasing the brake lever will not disengage the clutch 30 because the rollers 30a are wedged deeply in this state.

In Fig. 4, the arrow h shows the direction of rotation of the planetary carrier 3c of the transmission under the driving force of the driving motor 15; the arrow i shows the direction of rotation of the respective planetary gears 16b of the transmission while the carrier 3c is being driven by the motor 15; the arrow j shows the direction in which the outer ring gear 16d of the reducer cannot rotate around the motor housing 15b while the clutch 30 gets locked; and the arrow k shows the rotational direction of the output shaft 15a.

Thus, while reverse input is being produced, the outer ring gear 16d is fixed to the motor housing 15b, so that the reverse input is transmitted, after being reduced in speed, to the output shaft 15a, so that the motor can now generate electricity.

In this state, i.e. while reverse input is being produced, irrespective of which of the first to third one-way clutches 3e-1 to 3e-3 is engaged by the transmission control mechanism 10, the third sun gear 3a-3 of the transmission is fixed to the axle 5.

As described above, driving force from the rear sprocket 4 (force applied to the pedals) is increased in speed and transmitted to the drive wheel 45. Driving force from the driving motor 15 is reduced in speed by the reducer 16, transmitted to the planetary carrier 3c of the transmission, increased in speed by the transmission 3 and transmitted to the drive wheel 45.

Reverse input torque from the drive wheel 45 is reduced in speed in the transmission 3 by operating the switching device 30f. The reverse input torque is then increased in sped by the reducer and transmitted to the driving motor 15, so that the motor 15 can now generate electricity.

By the provision of the two-way clutch 30' (clutch 30), of which the engaging direction is changeable by operating the clutch from outside the axle 5, between the outer ring gear 16d and the motor housing 15b, it is possible to separate the motor, and thus to eliminate the influence of drag resistance from the motor, while the bicycle is being driven by manual force alone with no assisting force from the motor, and to selectively use the motor as a generator while the bicycle is traveling without being driven by engaging the two-way clutch in the reverse direction.

In this embodiment, the planetary gears 3b of the transmission each have three gear portions so that the transmission 3 provides three speeds. But instead, the planetary gears 3b may each have two or more than three gear portions so that the transmission 3 provides two or more than three speed ratios.

The transmission control mechanism 10 of the invention is not limited to the one shown. For example, its sleeve 10b may be configured so as to be axially movable relative to the axle 5 and so that at each of different axial positions, the cutouts of the sleeve 10b are radially aligned with only the selected clutch cam surfaces of the transmission, thereby allowing selectively engaging any of the one-way clutches 3e.

In this embodiment, the clutch pawl of any selected one of the ratchet type one-way clutches 3e is brought into engagement with the clutch cam surface by controlling the sleeve 10b of the transmission control mechanism 10 so that the sun gear 3a of the transmission corresponding to the engaged one-way clutch 3e can be selectively rotationally fixed to the axle 5. But a different transmission control mechanism may be used to selectively rotationally fix any of the sun gears 3a to the axle 5. The transmission may be a known transmission used in conventional bicycles.

In this embodiment, the first to third one-way clutches 3e-1 to 3e-3 and the one-way clutch 2 for reverse input are all ratchet clutches. But these clutches may be any other type of clutches such as roller clutches or sprag clutches. In the embodiment, the clutch 30 is a two-way roller clutch 30'. But instead, the clutch 30 may be a two-way sprag clutch 30'.

Alternatively, the clutch 30 may be a one-way clutch such as a ratchet clutch, a one-way roller clutch or a one-way sprag clutch. If a one-way clutch is used as the clutch 30, the clutch 30 has to be configured so as not to engage while force from the pedals 40 or reverse input is being applied with no driving force being produced from the driving motor 15.

With this arrangement, while force from the pedals 40 or reverse input is being applied with no driving force being produced from the driving motor 15, the outer ring gear 16d and the planetary gears 16b, of the reducer are freely rotatable around the motor housing 15b, so that no torque is transmitted to the output shaft 15a of the driving motor 15. This allows the bicycle to travel forward without encountering drag resistance from the motor.

(Second Embodiment)

The second embodiment is now described with reference to the drawings. As in the first embodiment, the power-assisted bicycle of this embodiment includes a driving motor 15 mounted in a hub 1 of a rear wheel, which is a drive wheel 45 (this hub is hereinafter referred to as "rear hub 1"), and is called a rear hub-motor type power-assisted bicycle.

When manual force is applied to the pedals 40 of the bicycle shown in Fig. 17, the manual force can be transmitted to the rear wheel as a driving force through the crankshaft 41 and a power transmission element such as a endless member or a chain 43 connecting a front sprocket 44 to a sprocket 4 for the rear wheel (hereinafter referred to as the "rear sprocket 4").

Driving force generated from the driving motor 15 can be transmitted to the rear wheel through e.g. a reducer 16 in the hub. Numeral 46 in Fig. 17 indicates a case in which a (secondary) battery (not shown) as a power source of the driving motor 15 is received.

While the bicycle is traveling forward without being driven, reverse input from the rear wheel is transmitted through the reducer 16 (where the reverse input is increased, rather than reduced, in speed) to the driving motor 15, and the electricity generated by the motor is stored in the secondary battery by means of a regeneration unit as in the first embodiment.

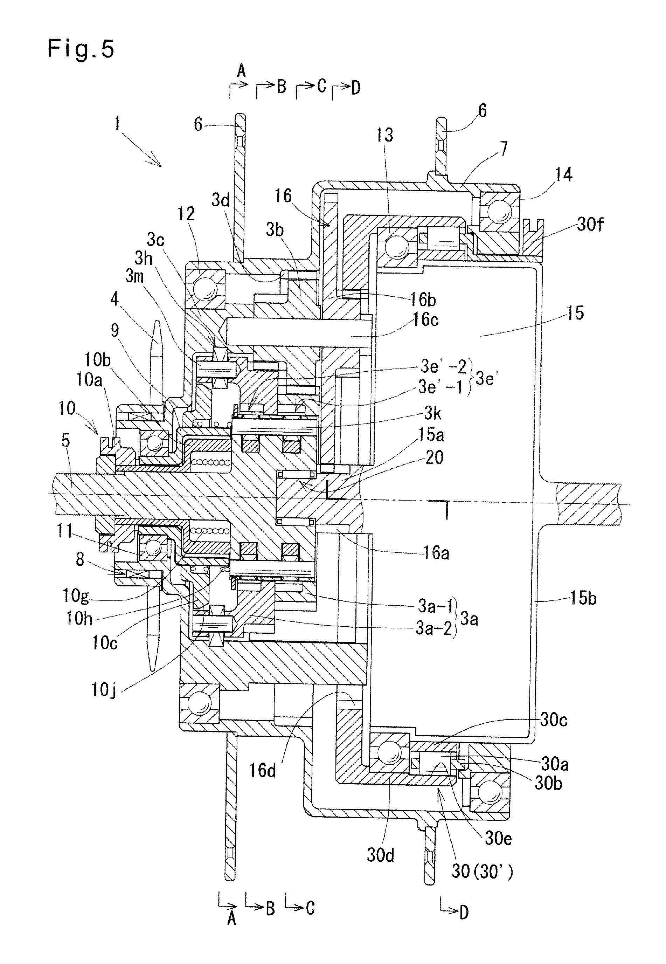

As shown in Fig. 5, the rear hub 1 includes a hub case 7 which is coaxial with the axle 5 of the rear wheel, and a transmission 3, the reducer 16 and the driving motor 15, which are all mounted in the hub case 7. The transmission 3 is a planetary gear mechanism that provides three speed ratios including a one-to-one speed ratio and two speed increase ratios. Numeral 6 in Fig. 5 indicates a hub flange integral with the rear wheel.

The transmission 3 includes two sun gears 3a, i.e. a first sun gear 3a-1 and a second sun gear 3a-2 which are mounted around the axle 5.

The first and second sun gears 3a-1 and 3a-2 of the transmission are connected to the axle 5 through first and second clutch elements 3e'-1 and 3e'-2 of a first clutch 3e' of the transmission, respectively.

The first and second clutch elements 3e'-1 and 3e'-2 of the first clutch 3e' of the transmission are both ratchet clutches.

The transmission 3 further includes planetary gears 3b each having two gear portions having different numbers of teeth and meshing with the first and second sun gears 3a-1 and 3a-2 of the transmission, respectively.

The transmission 3 further includes a planetary carrier retraining the planetary gears 3b of the transmission, an outer ring gear 3d meshing with the planetary gears 3b of the transmission and integral with the hub case 7, and a second clutch 3h disposed between the planetary carrier 3c of the transmission and the second sun gear 3a-2 of the transmission.

The second clutch 3h of the transmission is a ratchet clutch.

Both while driving force is being applied and while reverse input is being applied, it is possible both to engage either one of the first and second clutch elements 3e'-1 and 3e'-2 of the first clutch 3e' of the transmission and to keep both clutch elements 3e'-1 and 3e'-2 disengaged, by operating a transmission control mechanism 10 which is to be described later, thereby rotationally fixing the corresponding one of the first and second sun gears 3a-1 and 3a-2 of the transmission to the axle 5, or keeping both first and second sun gears 3a-1 and 3a-2 rotatable relative to the axle 5..

In particular, while driving force is being applied, it is possible both to rotationally fix either one of the first and second sun gears 3a-1 and 3a-2 to the axle 5 while keeping the other rotatable relative to the axle 5, and to keep both first and second sun gears 3a-1 and 3a-2 rotatable relative to the axle 5.

While reverse input is being applied too, it is possible both to rotationally fix either one of the first and second sun gears 3a-1 and 3a-2 to the axle 5 while keeping the other rotatable relative to the axle 5, and to keep both first and second sun gears 3a-1 and 3a-2 rotatable relative to the axle 5.

Both while driving force is being applied and while reverse input is being applied, the second clutch 3h of the transmission serves to selectively rotationally fix together the second sun gear 3a-2 and the planetary carrier 3c, of the transmission.

In particular, while driving force is being applied, the clutch 3h can be switched to a first position where the second sun gear 3a-2 of the transmission is not rotatable relative to the planetary carrier 3c of the transmission, and to a second position where the second sun gear 3a-2 of the transmission is rotatable relative to the planetary carrier 3c of the transmission.

While reverse input is being applied too, the clutch 3h can be selectively switched to either of the first and second positions.

In the embodiment, the outer ring gear 3d of the transmission meshes with the gear portion having the larger number of gear teeth, of each planetary gear 3b of the transmission. While the outer ring gear 3d may be brought into meshing engagement with the other gear portion of each planetary gear, the arrangement of the embodiment is preferably because with this arrangement, it is possible to maximize the difference between the highest and lowest speed increase ratios.

While in this embodiment, the outer ring gear 3d is an integral portion of the hub case 7, the outer ring gear 3d may a member separate from the hub case 7 and rotationally fixed to the hub case 7.

Bearings 11 and 12 are provided between the planetary carrier 3c of the transmission and the axle 5 and between the hub case 7 and the planetary carrier 3c of the transmission, respectively, to allow relative rotation between the planetary carrier 3c of the transmission and the axle 5 and between the hub case 7 and the planetary carrier 3c of the transmission.

Another bearing 14 is provided between a motor housing 15b supporting the driving motor 15 and the hub case 7, allowing relative rotation between the motor housing 15b and the hub case 7.

A one-way clutch 8 for the rear sprocket is provided between the rear sprocket 4 and the planetary carrier 3c of the transmission, which is positioned so as to transmit manual force applied to the pedals 40 to the planetary carrier 3c but not to transmit reverse input from the planetary carrier 3c to the rear sprocket 4. Thus, while the bicycle is traveling forward without being driven, the chain 43 does not move, which increases safety. The one-way clutch 8 for the rear sprocket may be a well-known one-way clutch.

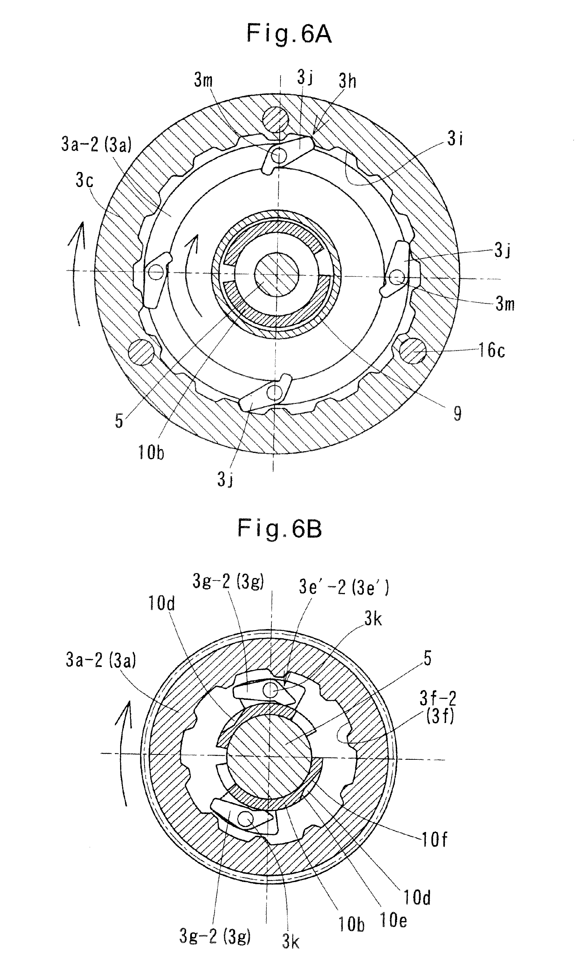

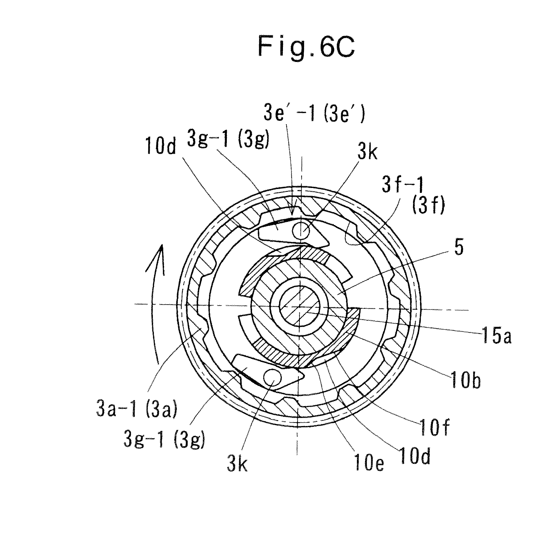

As shown in Figs. 6B and 6C, the first and second clutch elements 3e'-1 and 3e'-2 of the first clutch 3e' of the transmission each include clutch pawls 3g provided on the outer surface of the axle 5 and clutch cam surfaces 3f formed on the inner surface of the corresponding one of the sun gears 3a of the transmission such that the clutch pawls 3g can engage any of the clutch cam surfaces 3f.

The clutch pawls 3g of the first clutch element 3e'-1 are hereinafter referred to as the "first clutch element pawls 3g-1"; the clutch cam surfaces 3f of the first clutch element 3e'-1 are hereinafter referred to as the "first clutch element cam surfaces 3f-1"; the clutch pawls 3g of the second clutch element 3e'-2 are hereinafter referred to as the "second clutch element pawls 3g-2"; and the clutch cam surfaces 3f of the second clutch element 3e'-2 are hereinafter referred to as the "second clutch element cam surfaces 3f-2".

Each of the first clutch element pawls 3g-1 and each of the second clutch element pawls 3g-2 are supported by a single clutch shaft 3k of the transmission which extends in the axial direction of the axle 5 so as to be pivotable relative to the axle 5.

When the first clutch element pawls 3g-1 or the second clutch element pawls 3g-2 pivot about the clutch shafts 3k of the transmission, they are configured to engage or disengage from the first clutch element cam surfaces 3f-1 or the second clutch element cam surfaces 3f-2, which are formed on the inner surfaces of the first and second sun gears 3a-1 and 3a-2, respectively.

The first clutch element pawls 3g-1 of the first clutch element 3e'-1 are biased by individual elastic members (not shown) to pivot toward erect positions where the first clutch element pawls 3g-1 can each engage any of the first clutch element cam surfaces 3f-1. At least one, and not all, of the first clutch element pawls 3g-1 is biased to pivot in one direction such that its first circumferential end can engage any of the first clutch element cam surfaces 3f-1, and the remaining one or ones of the first clutch element pawls 3g-1 are biased to pivot in the opposite direction such that the second, circumferentially opposite end or ends thereof can engage one or more of the first clutch element cam surfaces 3f-1.

In Fig. 6C, the upper first clutch element pawl 3g-1 is biased to pivot clockwise about the clutch shaft 3k of the transmission, while the lower first clutch element pawl 3g-1 is biased to pivot counterclockwise about the clutch shaft 3k. Each of the first clutch element cam surfaces 3f-1 has walls at both circumferential ends so that either of the first clutch element pawls 3g-1 can engage any of the first clutch element cam surfaces 3f-1.

In the embodiment, there are two of the first clutch element pawls 3g-1 that are biased to pivot in opposite directions to each other about the respective clutch shafts 3k of the transmission. But more than two such first clutch element pawls 3g-1 may be used wherein at least one, and not all, of them is biased to pivot in one direction and the remaining one or ones are biased to pivot in the opposite direction.

The second clutch element 3e'-2 is of the same structure as the first clutch element 3e'-1. That is, the second clutch element pawls 3g-2 of the second clutch element 3e'-2 are biased by individual elastic members (not shown) to pivot toward erect positions where the second clutch element pawls 3g-2 can each engage any of the second clutch element cam surfaces 3f-2. At least one, and not all, of the second clutch element pawls 3g-2 is biased to pivot in one direction such that its first circumferential end engaged one of the second clutch element cam surfaces 3f-2, and the remaining one or ones of the second clutch element pawls 3g-2 are biased to pivot in the opposite direction such that the second, circumferentially opposite end or ends thereof engage one or more of the second clutch element cam surfaces 3f-2.

In Fig. 6B, the upper second clutch element pawl 3g-2 is biased to pivot clockwise about the clutch shaft 3k of the transmission, while the lower second clutch element pawl 3g-2 is biased to pivot counterclockwise about the clutch shaft 3k. Each of the second clutch element cam surfaces 3f-2 has walls at both circumferential ends so that either of the second clutch element pawls 3g-2 can engage any of the second clutch element cam surfaces 3f-2.

In the embodiment, there are two of the second clutch element pawls 3g-2 that are biased to pivot in opposite directions to each other about the respective clutch shafts 3k of the transmission. But more than two such second clutch element pawls 3g-2 may be used wherein at least one, and not all, of them is biased to pivot in one direction and the remaining one or ones are biased to pivot in the opposite direction.

As shown in Fig. 6A, the second clutch 3h of the transmission includes second clutch pawls 3j provided on the outer surface of the second sun gear 3a-2 of the transmission, and second clutch cam surfaces 3i formed on the inner surface of the planetary carrier 3c of the transmission such that the second clutch pawls 3j can each engage any of the second clutch cam surface 3i.

The second clutch pawls 3j are supported by respective clutch shafts 3m extending in the axial direction of the axle 5 so as to be pivotable relative to the axle 5.

When the second clutch pawls 3j of the transmission pivot about the respective clutch shafts 3m of the transmission, they are configured to engage or disengage from the second clutch cam surfaces 3i of the transmission, which are formed on the inner surface of the planetary carrier 3c of the transmission.

The second clutch pawls 3j of the second clutch 3h of the transmission are biased by individual elastic members (not shown) to pivot toward erect positions where the second clutch pawls 3j can each engage any of the second clutch cam surfaces 3i of the transmission. At least one, and not all, of the second clutch pawls 3j is biased to pivot in one direction such that its first circumferential end engages one of the second clutch cam surfaces 3i, and the remaining one or ones of the second clutch pawls 3j are biased to pivot in the opposite direction such that the second, circumferentially opposite end or ends thereof engage one or more of the second clutch cam surfaces 3i.

In Fig. 6A, the upper and lower second clutch pawls 3j are biased to pivot clockwise about the respective clutch shafts 3m of the transmission, while the right and left second clutch pawls 3j are biased to pivot counterclockwise about the respective clutch shafts 3m. Each of the second clutch cam surfaces 3i has walls at both circumferential ends so that any of the second clutch pawls 3j can engage any of the second clutch cam surfaces 3i.

In the embodiment, there are four of the second clutch pawls 3j of which two are biased to pivot in direction about the respective clutch shafts 3m of the transmission and the other two are biased to pivot in the opposite direction about the respective clutch shafts 3m. But two, three or more than four such second clutch pawls 3j may be used wherein at least one, and not all, of them is biased to pivot in one direction and the remaining one or ones are biased to pivot in the opposite direction.

As described above, while driving force is being applied, it is possible to selectively rotationally fix either one of the sun gears 3a to the axle 5, or keep both sun gears 3a rotatable relative to the axle 5 by operating the transmission control mechanism 10. That is, by operating the transmission control mechanism 10, it is possible to rotationally fix either one of the first and second sun gears 3a-1 and 3a-2 of the transmission to the axle 5 through the corresponding one of the first and second clutch elements 3e'-1 and 3e'-2 of the first clutch 3e' of the transmission, while keeping the other of the sun gears 3a-1 and 3a-2 rotatable relative to the axle 5, or to keep both first and second sun gears 3a-1 and 3a-2 relative to the axle 5.

In other words, both while driving force is being applied and while reverse input is being applied, the speed change is made by selectively engaging only one of the first and second clutch elements 3e'-1 and 3e'-2 of the first clutch 3e' of the transmission and the second clutch 3h of the transmission, with the remaining two not engaged, by operating the transmission control mechanism 10.

If driving force is applied from the rear sprocket 4 while, for example, the second clutch 3h of the transmission is engaged, with the first and second clutch elements 3e'-1 and 3e'-2 of the first clutch 3e' of the transmission not engaged, whereby the second sun gear 3a-2 of the transmission is rotationally fixed to the planetary carrier 3c of the transmission with the first and second sun gears 3a-1 and 3a-2 of the transmission kept rotatable relative to the axle 5, the driving force is transmitted to the planetary gears 3b of the transmission through the planetary carrier 3c of the transmission. Since the first sun gear 3a-1 of the transmission is rotationally fixed to the planetary carrier 3c of the transmission in this state, the driving force is transmitted to the outer ring gear 3d of the transmission (hub case 7) through the planetary gears 3b at a one-to-one speed ratio.

When the first clutch element 3e'-1 of the first clutch 3e' of the transmission is engaged, with the second clutch 3h of the transmission and the second clutch element 3e'-2 of the first clutch 3e' not engaged, whereby the first sun gear 3a-1 of the transmission is rotationally fixed to the axle 5 with the second sun gear 3a-2 of the transmission kept rotatable relative to both the planetary carrier 3c of the transmission and the axle 5, the speed increase ratio from the planetary carrier 3c of the transmission to the outer ring gear 3d of the transmission is given by:

$$(a + d)/d$$

where a is the number of teeth of the first sun gear 3a-1 of the transmission; and d is the number of teeth of the outer ring gear 3d of the transmission. In this state, the second sun gear 3a-2 of the transmission is freely rotatable and is not involved in the torque transmission.

When the second clutch element 3e'-2 of the first clutch 3e' of the transmission is engaged, with the second clutch 3h of the transmission and the first clutch element 3e'-1 of the first clutch 3e' not engaged, whereby the second sun gear 3a-2 of the transmission is rotationally fixed to the axle 5 but kept rotatable relative to the planetary carrier 3c of the transmission with the first sun gear 3a-1 of the transmission kept rotatable relative to the axle 5, the speed increase ratio from the planetary carrier 3c of the transmission to the outer ring gear 3d of the transmission is given by:

$$[(a \times b)/(c \times d)] + 1$$

where a is the number of teeth of the second sun gear 3a-2 of the transmission; b is the number of teeth of the gear portion of each planetary gear 3b of the transmission that meshes with the first sun gear 3a-1 of the transmission; c is the number of teeth of the gear portion of each planetary gear 3b of the transmission that meshes with the second sun gear 3a-2 of the transmission; and d is the number of teeth of the outer ring gear 3d of the transmission. In this state, the first sun gear 3a-1 of the transmission is freely rotatable and is not involved in the torque transmission.

Since the first and second sun gears 3a-1 and 3a-2 of the transmission have different numbers of teeth, the speed increase ratio can be changed by changing from one to another of the following three positions: position 1 where the second sun gear 3a-2 of the transmission is rotationally fixed to the planetary carrier 3c of the transmission but kept rotatable relative to the axle 5 with the first sun gear 3a-1 of the transmission kept rotatable relative to the axle 5; position 2 where the second sun gear 3a-2 of the transmission is rotationally fixed to the axle 5 but kept rotatable relative to the planetary carrier 3c of the transmission with the first sun gear 3a-1 kept rotatable relative to the axle 5; and position 3 where the first sun gear 3a-1 is rotationally fixed to the axle 5 with the second sun gear 3a-2 kept rotatable relative to both the planetary carrier 3c and the axle 5.

By operating the transmission control mechanism 10, it is possible to selectively engage any one of the first and second clutch elements 3e'-1 and 3e'-2 of the first clutch 3e' of the transmission and the second clutch 3h of the transmission, while keeping the remaining two not engaged.

The transmission control mechanism 10 includes a transmission control sleeve 10b having a cylindrical portion mounted around and rotatable around the axle 5.

The transmission control sleeve 10b is disposed between the first clutch element pawls 3g-1 of the first clutch element 3e'-1 and the axle 5, and between the second clutch element pawls 3g-2 of the second clutch element 3e'-2 and the axle 5. The transmission control mechanism 10 further includes a control member 10a of which one axial end protrudes from the hub case 7 and to which the transmission control sleeve 10b is coupled.

By operating the control member 10a from outside the hub case 7, it is possible to rotate the control member 10a and thus the transmission control sleeve 10b around the axle 5 for the speed change.

The transmission control sleeve 10b has cutouts 10d on its outer surface which are concave toward the axis of the axle 5, and as shown in Figs. 6B and 6C, each have first and second tapered surfaces 10e and 10f which extend from the circumferential center of the cutout 10d obliquely radially outwardly toward the respective circumferential ends of the cutout 10d.

The transmission control mechanism 10 further includes an annular second clutch switching member 10c configured to rotate together with the transmission control sleeve 10b while simultaneously moving in the axial direction of the axle 5 in the manner described below.

The transmission control sleeve 10b is biased by a first elastic member 10g mounted around the axle 5 to rotate counterclockwise in Figs. 6A to 6C. The second clutch switching member 10c is biased axially leftwardly in Fig. 5 by a second elastic member 10h mounted around the axle 5. In the embodiment, the first and second elastic members 10g and 10h are coil springs. But they may be a different type of elastic members such as leaf springs or disc springs.

When the transmission control sleeve 10b is rotated clockwise in Figs. 6A to 6C against the force of the first elastic member 10g by operating the control member 10a, the second clutch switching member 10c is also rotated clockwise.

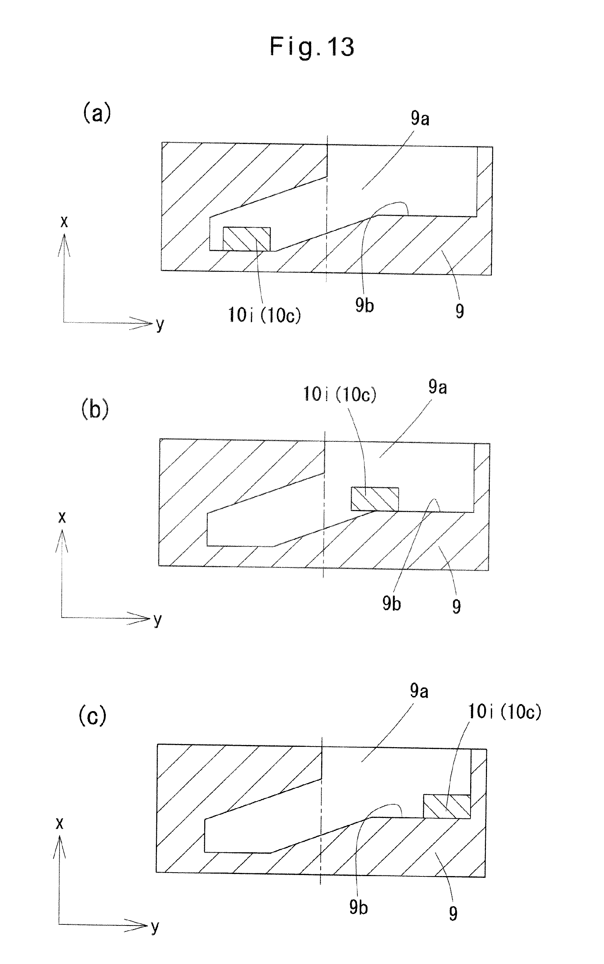

As shown in Fig. 13, the second clutch switching member 10c has a guide portion 10i radially inwardly protruding from the inner surface of the member 10c and adapted to be guided in a guide groove 9a formed in a stationary member 9 provided around the axle 5.

When the second clutch switching member 10c is rotated in the direction shown by the arrow y in Fig. 13(a) (which corresponds to the clockwise direction) against the force of the first elastic member 10g, its guide portion 10i (and thus the entire switching member 10c) is simultaneously moved in one axial direction of the axle 5, i.e. in the direction shown by the arrow x in Fig. 13(a) against the force of the second elastic member 10h, while being guided by the guide groove 9a, to the position shown in Fig. 13(b).

When the second clutch switching member 10c is further rotated in the direction y until its guide portion 10i moves from the position of Fig. 13(b) to the position of Fig. 13(c), the guide portion 10i is pressed against the inner surface 9b of the guide groove 9a under the force of the second elastic member 10h and the second clutch switching member 10c is held stationary in this position.

When the transmission control sleeve 10b is rotated counterclockwise in Figs. 6A to 6C from the position where the member 10c is in the position of Fig. 13(c), the guide portion 10i (and thus the entire second clutch switching member 10c) is rotated in the direction opposite to the direction y while being pressed against the inner surface 9b of the guide groove 9a under the force of the second elastic member 10c, to the position of Fig. 13(b) and then to the original position of Fig. 13(a). When the guide portion 101 is rotated from the position of Fig. 13 (b) to the position of Fig. 13(a), the guide portion 10i is also moved in the axial direction opposite to the axial direction x. In the position of Fig. 13(a), the guide portion 10i is pressed against the inner surface of the guide groove 9a, so that the second clutch switching member 10c is held stationary in this position.

When the second clutch switching member 10c is moved in either axial direction, the second clutch 3h of the transmission is switched over between its engageable and disengaged positions. In particular, in the state of Figs. 5 and 6A, where the second clutch switching member 10c is clear of the third clutch paws 3j of the second clutch 3h of the transmission, the second clutch 3h is in its engageable position, where the clutch 3h engages while driving force or reverse input is being applied. This state may e.g. be considered to correspond to the state of Fig. 13(a).

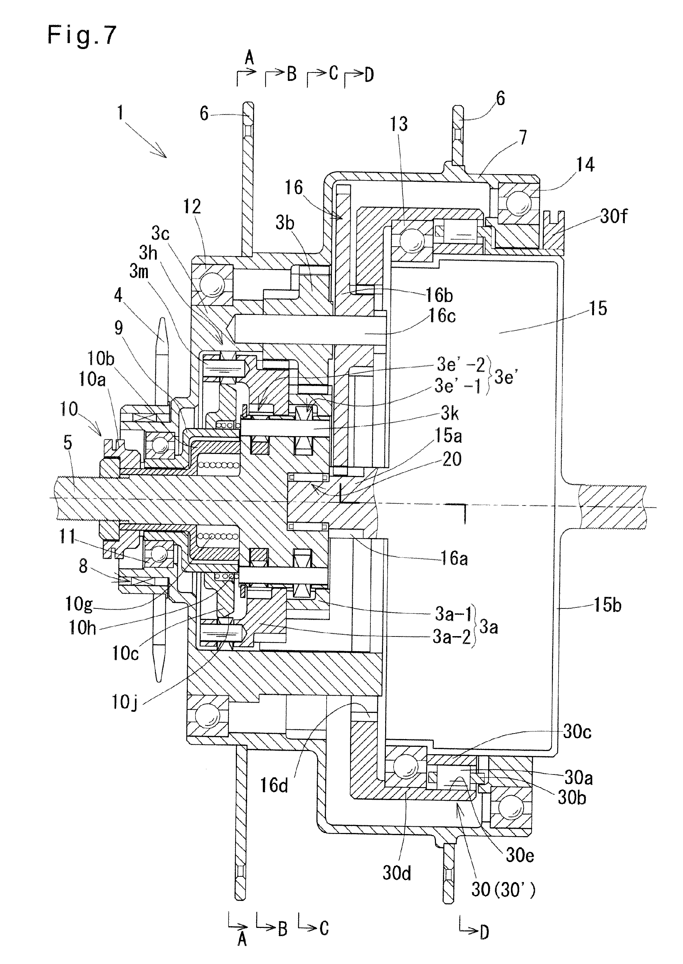

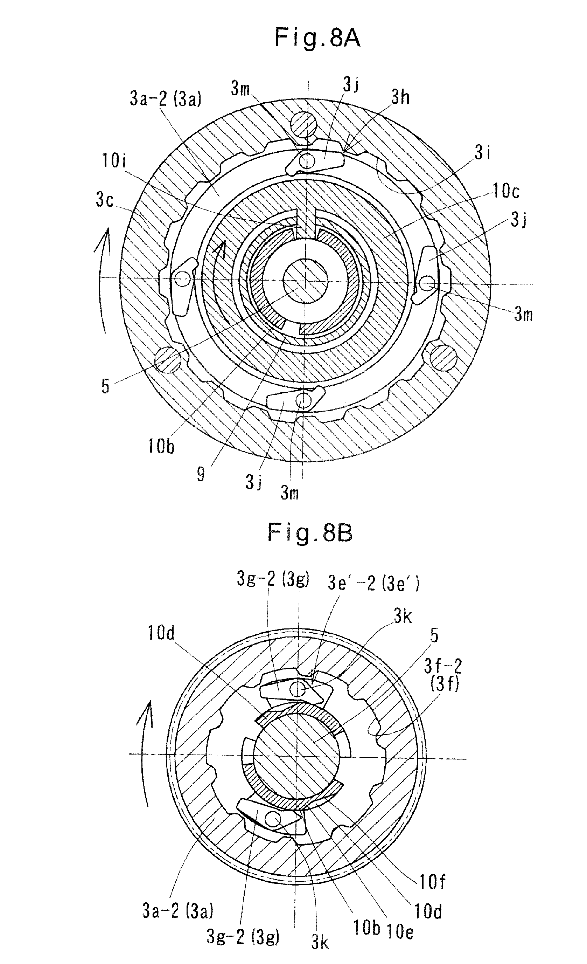

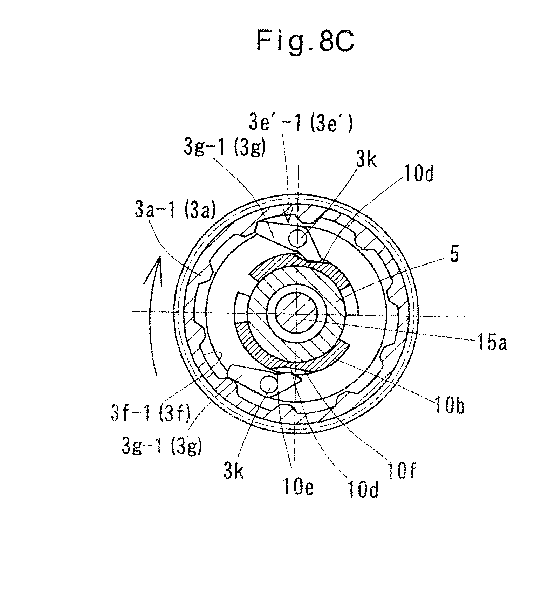

Figs. 7 and 8A show the state in which the second clutch switching member 10c is in abutment with the second clutch pawls 3j of the second clutch 3h of the transmission. In this state, the second clutch switching member 10c pushes the second clutch pawls 3j radially outwardly, thus keeping the second clutch 3h of the transmission in the disengaged position, where the second clutch 3h does not engage when driving force or reverse input is applied. This state may e.g. be considered to correspond to the states of Figs. 13(b) and 13(c).

When the transmission control sleeve 10b is rotated around the axle 5 to the position where its cutouts 10d are radially aligned with the respective first clutch element pawls 3g-1 of the first clutch element 3e'-1 and not radially aligned with any of the second clutch element pawls 3g-2 of the second clutch element 3e'-2, the first clutch element pawls 3g-1 are allowed to pivot about the respective clutch shafts 3k of the transmission under the biasing force of the elastic members, not shown, because they are not restricted by the transmission control sleeve 10b. Thus, the first clutch element pawls 3g-1 are pivoted to positions where they can each engage any of the first clutch element cam surfaces 3f-1. On the other hand, since the second clutch element pawls 3g-2 are prevented from pivoting about the respective clutch shafts by the transmission control sleeve 10b, they cannot engage the second clutch element cam surfaces 3f-2 while driving force or reverse input is being applied. This state may e.g. be considered to correspond to the state of Fig. 13(b).

When the transmission control sleeve 10b is rotated around the axle 5 to the position where its cutouts 10d are not radially aligned with any of the first clutch element pawls 3g-1 of the first clutch element 3e'-1 and radially aligned with the respective the second clutch element pawls 3g-2 of the second clutch element 3e'-2, since the first clutch element pawls 3g-1 are prevented from pivoting about the respective clutch shafts by the transmission control sleeve 10b, they cannot engage the first clutch element cam surfaces 3f-1 while driving force or reverse input is being applied. On the other hand, the second clutch element pawls 3g-2 are allowed to pivot about the respective clutch shafts 3k of the transmission under the biasing force of the elastic members, not shown, because they are not restricted by the transmission control sleeve 10b. Thus, the second clutch element pawls 3g-2 are pivoted to positions where they can each engage any of the second clutch element cam surfaces 3f-2. This state may e.g. be considered to correspond to the state of Fig. 13(c).

Figs. 5 and 6A to 6C show the state in which the first speed ratio (one-to-one speed ratio) is selected. In this state, the first and second clutch element pawls 3g-1 and 3g-2 of the first and second clutch elements 3e'-1 and 3e'-2 of the first clutch 3e' of the transmission each have one end thereof in abutment with the transmission control sleeve 10b, so that they are prevented from pivoting under the force of the elastic members and thus kept at positions where they cannot engage the first and second clutch element cam surfaces 3f-1 and 3f-2, respectively. The first and second sun gears 3a-1 and 3a-2 of the transmission are therefore both rotatable around the axle 5.

On the other hand, the planetary carrier 3c and the second sun gear 3a-2, of the transmission are rotationally fixed together through the second clutch 3h of the transmission while driving force is applied. Driving force from the rear sprocket 4 is thus transmitted through the planetary carrier 3c of the transmission and the planetary gears 3b of the transmission to the hub case 7 (outer ring gear 3d of the transmission) at a one-to-one speed ratio.

Figs. 7 and 8A to 8C show the state in which the second speed ratio (first speed increase ratio) is selected. This state is reached by turning the control member 10a of the transmission control mechanism 10 from outside, thus rotating the transmission control sleeve 10b until all of the first clutch element pawls 3g-1 of the first clutch element 3e'-1 are radially aligned with the respective cutouts 10d of the transmission control sleeve 10b.

In this state, the first clutch element pawls 3g-1 of the first clutch element 3e'-1 are allowed to pivot about the respective clutch shafts 3k of the transmission under the biasing force of the elastic members, not shown, because they are not restricted by the transmission control sleeve 10b. Thus, one of the first clutch element pawls 3g-1 that is biased to pivot in the same direction as the rotational direction of the first sun gear 3a-1 of the transmission, which is the clockwise direction in Figs. 8A to 8C, becomes engageable with any of the first clutch element cam surfaces 3f-1. Thus, while driving force is being applied, the first sun gear 3a-1 of the transmission is rotationally fixed to the axle 5.

When the transmission control sleeve 10b is turned and the second clutch switching member 10c is moved in the axial direction (from the position shown in Fig. 13(a) to the position shown in Fig. 13(b)), a tapered surface 10j of the second clutch switching member 10 contacts one of the ends of every one of the second clutch pawls 3j of the second clutch 3h that is located nearer to the second clutch switching member 10c, thus separating the second clutch pawls 3j from the second clutch cam surfaces 3i of the second clutch 3h. Thus, in this state, the planetary carrier 3c and the second sun gear 3a-2, of the transmission are rotatable relative to each other.

In the state, the driving force from the rear sprocket 4 is transmitted to the hub case 7 at a speed increase ratio given by:

$$(a + d)/d$$

where a is the number of teeth of the first sun gear 3a-1 of the transmission; and d is the number of teeth of the outer ring gear 3d of the transmission.

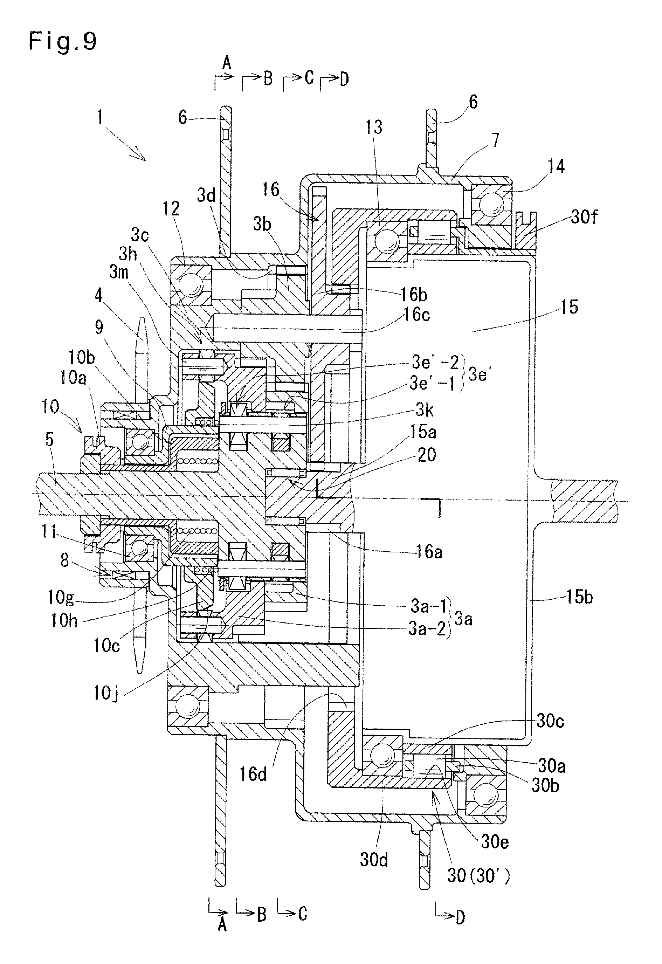

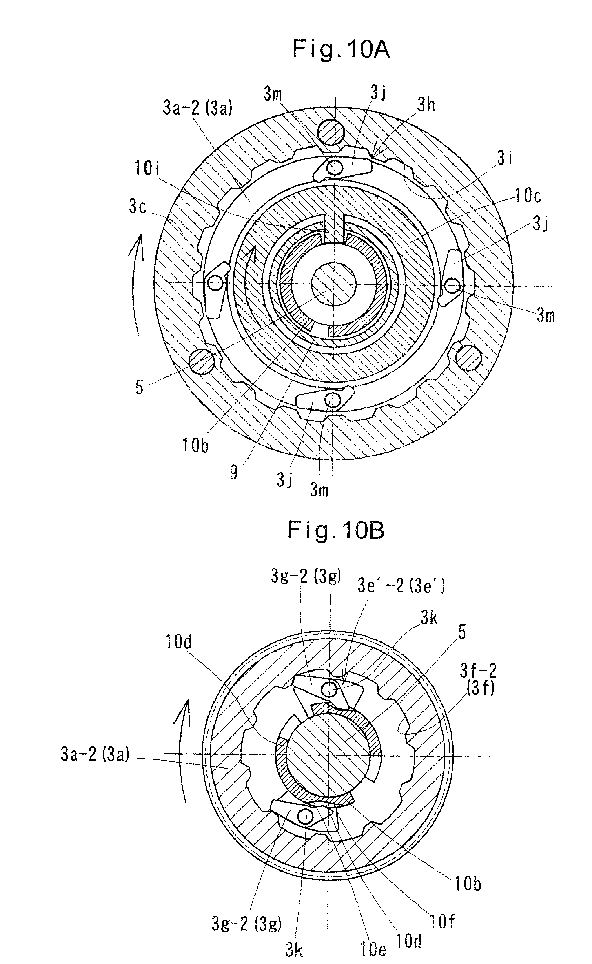

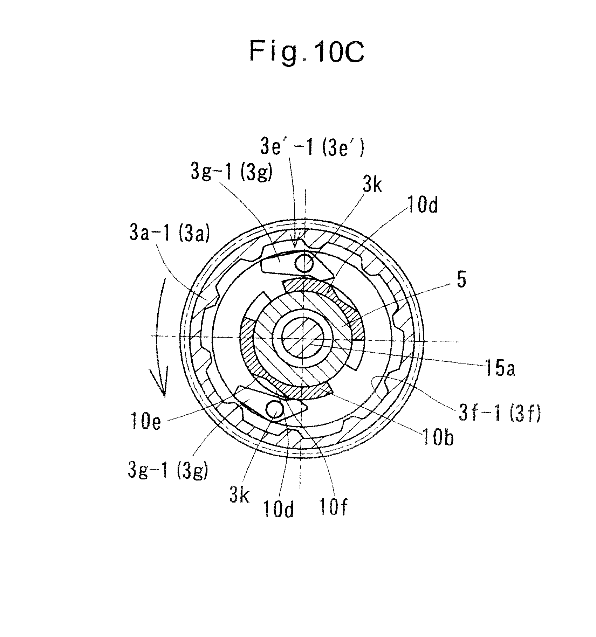

Figs. 9 and 10A to 10C show the state in which the third speed ratio (second speed increase ratio) is selected. This state is reached by turning the control member 10a of the transmission control mechanism 10 from outside, thus rotating the transmission control sleeve 10b until all of the second clutch element pawls 3g-2 of the second clutch element 3e'-2 are radially aligned with the respective cutouts 10d of the transmission control sleeve 10b.

In this state, the second clutch element pawls 3g-2 of the second clutch element 3e'-2 are allowed to pivot about the respective clutch shafts 3k of the transmission under the biasing force of the elastic members, not shown, because they are not restricted by the transmission control sleeve 10b. Thus, one of the second clutch element pawls 3g-2 that is biased to pivot in the same direction as the rotational direction of the second sun gear 3a-2 of the transmission, which is the clockwise direction in Figs. 10A to 10C, becomes engageable with any of the second clutch element cam surfaces 3f-2. Thus, while driving force is being applied, the second sun gear 3a-2 of the transmission is rotationally fixed to the axle 5.

On the other hand, the transmission control sleeve 10b abuts the end of each first clutch pawl 3g-1 of the first clutch element 3e'-1, thus preventing the first clutch element pawls 3g-1 from pivoting under the force of the elastic members and thus keeping the first clutch element pawls 3g-1 at positions where they cannot engage the first clutch element cam surfaces 3f-1. When the first clutch element pawls 3g-1 disengage from the respective cutouts 10d, the second tapered surfaces 10f of the respective cutouts 10d apply to the clutch element pawls 3g-1 a moment that tends to disengage the clutch element pawls, helping smooth disengagement of the pawls. The first sun gear 3a-1 of the transmission thus becomes rotatable relative to the axle 5.

In this state, since the second clutch switching member 10c does not move in the axial direction while the transmission control sleeve 10b is rotated from the position of Fig. 13(b) to the position of Fig. 13(c), the second clutch pawls 3j of the second clutch 3h are separated from the second clutch cam surfaces 3i of the second clutch 3h by the second clutch switching member 10c, so that the planetary carrier 3c of the transmission is rotatable relative to the second sun gear 3a-2 of the transmission.

In the state, the driving force from the rear sprocket 4 is transmitted to the hub case 7 at a speed increase ratio given by:

$$[(a \times b)/(c \times d)] + 1$$

where a is the number of teeth of the second sun gear 3a-2 of the transmission; b is the number of teeth of the gear portion of each planetary gear 3b of the transmission that meshes with the first sun gear 3a-1 of the transmission; c is the number of teeth of the gear portion of each planetary gear 3b of the transmission that meshes with the second sun gear 3a-2 of the transmission; and d is the number of teeth of the outer ring gear 3d of the transmission.

During downshifting (from the third to second speed ratio or from the second to first speed ratio), the transmission control sleeve 10b is rotated in the reverse direction by the first elastic member 10g. In this state, the first tapered surfaces 10e of the cutouts 10d serve to push up either the first clutch element pawls 3g-1 or the second clutch element pawls 3g-2 that are in engagement with the respective first clutch element cam surfaces 3f-1 or second clutch element cam surfaces 3f-2, thus allowing smoother rotation of the transmission control sleeve 10b and thus smoother speed change.

The driving motor 15 is axially aligned with and is located in juxtaposition with the transmission 3 and the reducer 16. The output of the driving motor 15 is reduced in speed in the reducer 16 and is transmitted to the planetary carrier 3c of the transmission, and then transmitted through the transmission 3 to the hub case 7 at a speed increase ratio determined by the positions of the first clutch 3e' and the second clutch 3h, as set by the transmission control mechanism 10.

The reducer 16 includes a sun gear 16a in the form of gear teeth formed on the radially outer surface of the output shaft 15a of the driving motor 15, planetary gears 16b each having two gear portions, one of which meshes with the sun gear 16a, an outer ring gear 16d rotatably supported by the motor housing 15b through a bearing 13 and a clutch 30, and a planetary carrier 16b supporting the planetary gears 16b of the reducer.

The planetary carrier 3c of the transmission 3 also serves as the planetary carrier of the reducer. Thus, the planetary gears 3b of the transmission and the planetary gears 26b of the reducer are supported by the planetary carrier 3c of the transmission through common shafts 16c. By using the planetary carrier of the transmission also as the planetary carrier of the reducer, it is possible to reduce the axial dimension of the entire device.

In this embodiment, the output shaft 15a of the driving motor 15 is connected to the axle 5 so as to be coaxial with the axle 5 and rotatable relative to the axle 5 about their common axis by means of a bearing 20. By supporting the output shaft 15a of the driving motor 15 so as to be rotatable relative to the axle 5 by means of the bearing 20, the rigidity of the axle 5 and the driving motor 15 increases.

In this embodiment, the clutch 30 is a two-way roller clutch 30'.

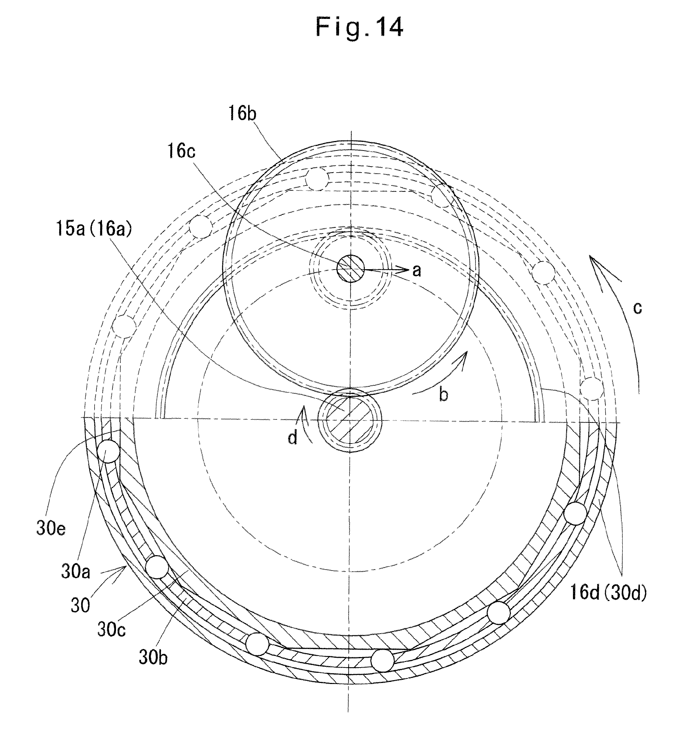

The two-way roller clutch 30' includes an inner ring 30c having roller clutch cam surfaces 30e formed on the outer surface of the motor housing 15b, rollers 30a retained by a retainer 30b so as to be located on the respective roller cam surfaces 30e, and a cylindrical outer ring 30d having an inner surface which is also the inner surface of the outer ring gear 16d of the reducer. The rollers 30a are biased by an elastic member, not shown, in a direction to engage when driving force is applied from the driving motor 15 (i.e. counterclockwise in Fig. 14).

The speed reduction ratio of the driving force from the driving motor 15 is given by:

$$[(a \times b)/(c \times d)] + 1$$

where a is the number of teeth of the gear portion of each planetary gear 16b of the reducer that meshes with the sun gear 16a of the reducer; b is the number of teeth of the outer ring gear 16d of the reducer; c is the number of teeth of the sun gear 16a of the reducer; and d is the number of teeth of the gear portion of each planetary gear 16b of the reducer that meshes with the outer ring gear 16d of the reducer.

The driving force from the driving motor 15 can be transmitted to the planetary carrier 3c of the transmission through the sun gear 16a of the reducer because the outer ring gear 16d of the reducer is locked in position around the motor housing 15b by means of the clutch 30.

In Fig. 14, the arrow a indicates the direction in which the planetary carrier 3c of the transmission is rotated by the driving motor 15; the arrow b indicates the direction of rotation of the planetary gears 16b of the reducer when the carrier 3c is being rotated by the motor in the direction of the arrow a; the arrow c indicates the direction in which the outer ring gear 16a is locked up around the motor housing 15b by the clutch 30 (two-way clutch 30'); and the arrow d indicates the direction of rotation of the output shaft 15a.

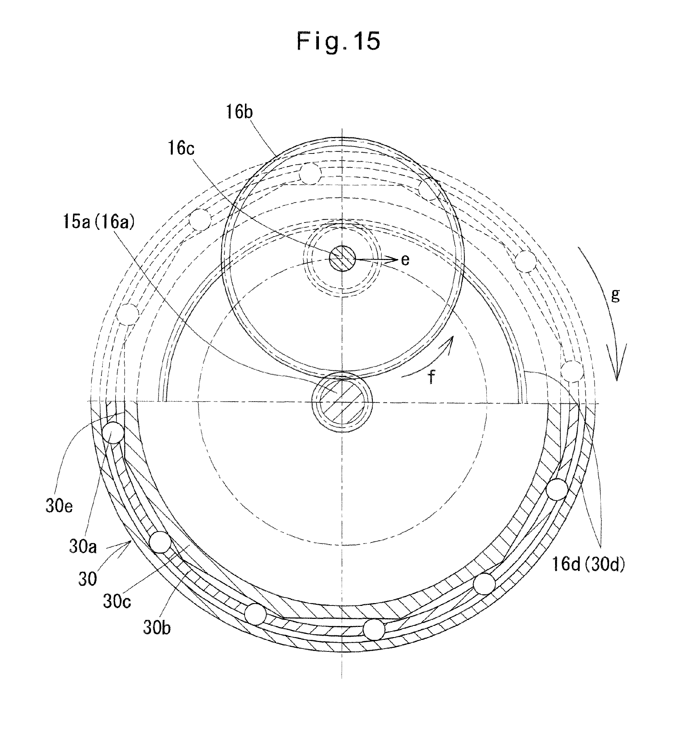

While the driving motor is producing no driving force (assisting force), as shown in Fig. 15, manual force applied to the pedals 40 and reverse input from the drive wheel 45 are transmitted to the planetary gears 16b of the reducer through the planetary carrier 3c of the transmission.

In Fig. 15, the arrows e and f indicate the respective directions in which the planetary carrier 3c of the transmission and each planetary gear 16b of the reducer rotate under manual force applied to the pedals 40 or reverse input from the drive wheel 45 with no driving force from the driving motor 15, and the arrow g indicates the direction in which the outer ring gear 16 of the reducer can rotate around the motor housing 15b.

In this state, since the rotational direction of the outer ring gear 16d of the transmission (direction of torque) is opposite to its rotational direction while the assisting force is being applied, the clutch 30 (two-way clutch 30') does not engage. The outer ring gear 16d of the reducer is thus freely rotatable (in the direction of the arrow g) around the motor housing 15b, so that no torque is transmitted to the output shaft 15a of the driving motor 15. Thus, the bicycle can move forward without encountering drag resistance from the motor.

That is, the manual force applied to the pedals is never transmitted to the output shaft 15a of the driving motor 15 because the outer ring gear 16d of the reducer is freely rotatable relative to the motor housing 15b and thus unable to receive torque.

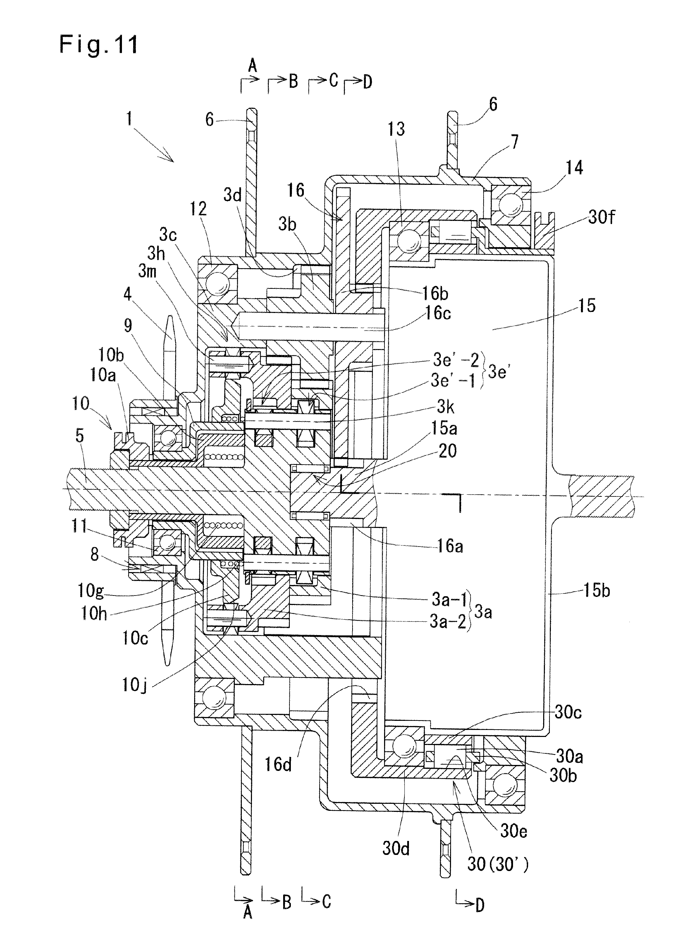

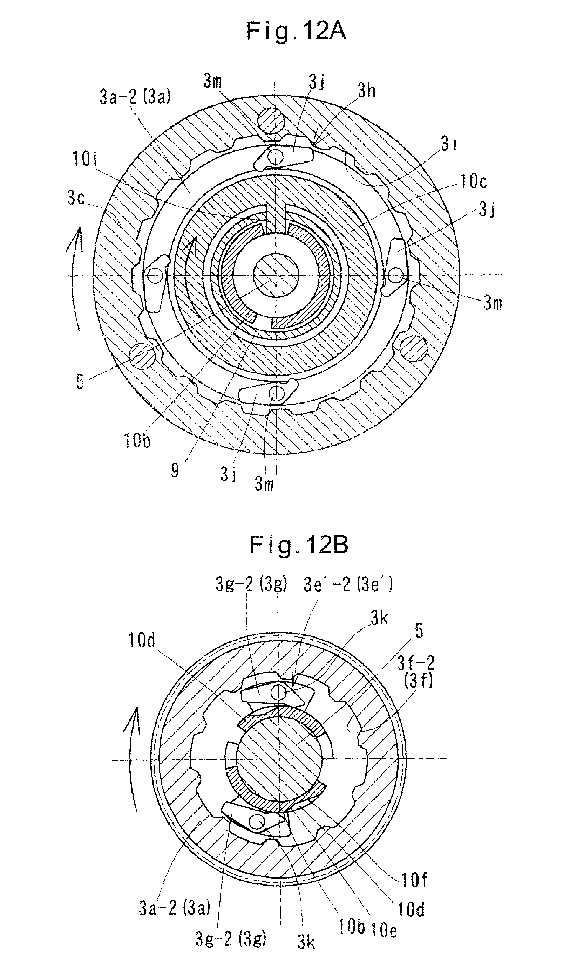

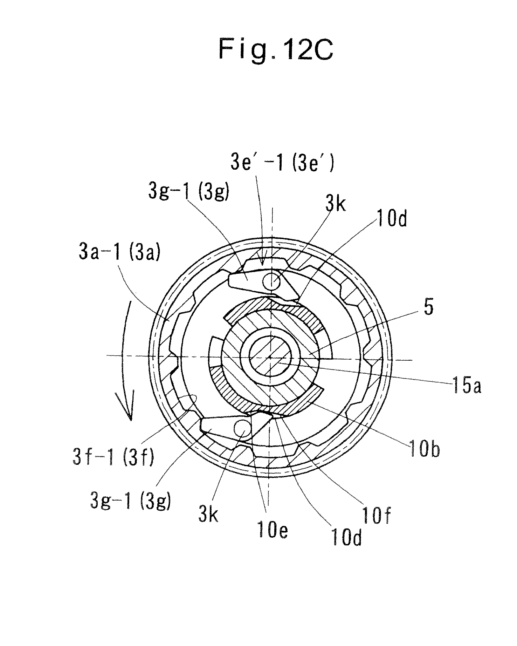

While the bicycle is traveling forward without being driven, reverse input from the drive wheel is transmitted to the planetary gears 3b of the transmission through the hub case 7, and then to the planetary carrier 3c of the transmission at the speed reduction ratio selected by operating the transmission control mechanism 10. Figs. 11 and 12A to 12C show the state in which the second speed ratio is selected. In this state, since the first sun gear 3a-1 of the transmission is rotationally fixed to the axle 5, the reverse input from the hub case 7 is transmitted to the planetary carrier 3c of the transmission at the speed reduction ratio given by:

$$(a + d)/d$$

where a is the number of teeth of the first sun gear 3a-1 of the transmission; and d is the number of teeth of the outer ring gear 3d of the transmission.

The reverse input from the drive wheel 45 is therefore transmitted to the planetary carrier 3c of the transmission after being reduced in speed in the transmission 3, and then transmitted to the driving motor 15 after being increased in speed in the reducer so that the motor 15 generate electricity to be stored in the battery.

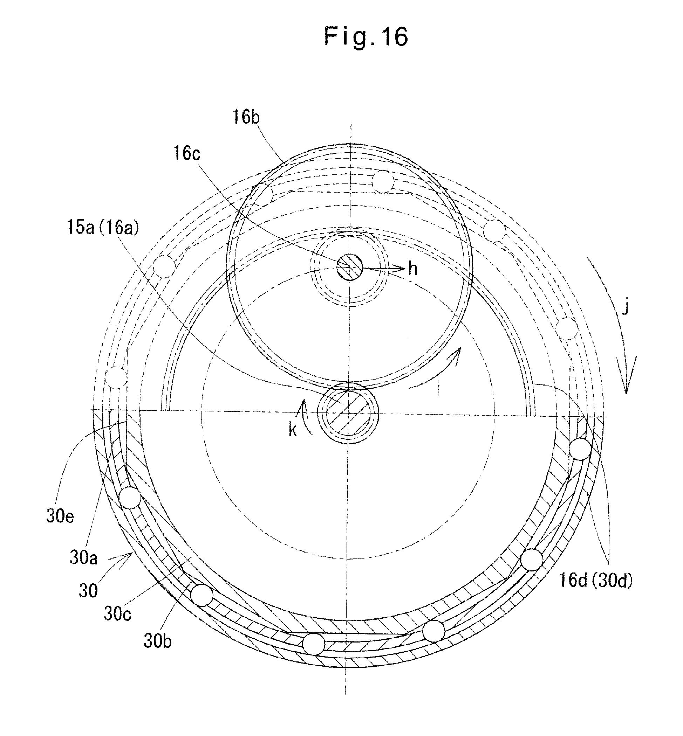

While reverse input is being produced, by operating a switching device 30f coupled to the retainer 30b to bias the rollers 30a clockwise in Fig. 16 from outside the axle 5, the clutch 30 is moved to an engageable position. Thus, the outer ring gear 16c of the reducer is fixed to the motor housing 15b, so that the reverse input is transmitted to the output shaft 15a after being increased in speed, allowing the motor to generate electricity.

The switching device 30f can selectively restrict the movement of the retainer 30b toward the engaged position (as described above, the retainer 30b is biased toward the engaged position by the elastic member, not shown). That is, when the circumferential movement of the retainer 30b toward the engaged position is restricted by the switching device 30f, the clutch 30 (two-way clutch 30') never locks up while reverse input is being produced. When this restriction is released, the clutch 30 (two-way clutch 30') locks up while reverse input is being produced.

In Fig. 16, the arrow h indicates the direction in which the planetary carrier 3c of the transmission is rotated by the driving motor 15; the arrow i indicates the direction of rotation of the planetary gears 16b of the reducer when the carrier 3c is being rotated by the motor in the direction of the arrow h; the arrow j indicates the direction in which the outer ring gear 16d locks up around the motor housing 15b; and the arrow k indicates the direction of rotation of the output shaft 15a.

Thus, the outer ring gear 16d is fixed to the motor housing 15b when reverse input is produced, so that the reverse input is increased in speed and transmitted to the output shaft 15a, allowing the motor 15 to generate electricity.

While the bicycle is backing (for example, by being manually pushed), only one of the first and second clutch elements 3e'-1 and 3e'-2 of the first clutch 3e' of the transmission and the second clutch 3h of the transmission is engageable at all times. Thus, these clutches never interfere with each other, which means that the bicycle can be backed up at any of the speed ratios.

In summary, driving force from the rear sprocket 4 (manual force) is transmitted to the drive wheel 45 after being increased in speed. Driving force from the driving motor 15 is reduced in speed in the reducer 16 and transmitted to the planetary carrier 3c of the transmission, and then increased in speed in the transmission 3 and transmitted to the drive wheel 45.

Reverse input from the drive wheel 45 is reduced in speed in the transmission at the speed reduction ratio determined by the operation of the switching device 30f, then increased in speed in the reducer 16, and transmitted to the driving motor 15, so that the driving motor 15 can generate electricity.

By providing the clutch 30 in the form of the two-way clutch 30' between the outer ring gear 16d of the reducer and the motor housing 15b such that its engaging direction is changeable by operation from outside the axle 5, while the bicycle is traveling forward without being driven, it is possible to prevent drag resistance of the motor from acting on the drive wheel, thus preventing the bicycle from slowing down. By engaging the two-way clutch in the reverse direction, it is possible to use the driving motor as a generator for generating electricity. By using the transmission which provides a one-to-one speed ratio and a plurality of speed increase ratios, it is possible to increase the speed range while minimizing the size of the transmission.

In this embodiment, each planetary gear 3b has two gear portions, so that the transmission 3 provides three speed ratios, including the one-to-one speed ratio. But instead, the planetary gears 3b may each have only one gear portion or more than two gear portions.

Instead of the transmission control mechanism 10 shown, another transmission control mechanism may be used such as including a sleeve 10b axially movable relative to the axle 5. Such a sleeve 10b includes cutouts which are adapted to radially align with the pawls of any selected one of the first and second clutch elements 3e'-1 and 3e'-2 of the first clutch 3e' of the transmission and the second clutch 3h of the transmission.

In the embodiments, the first clutches 3e or the clutch elements of the first clutch 3e' are ratchet clutches including ratchet pawls which can be selectively brought into engagement with the corresponding cam surfaces by operating the sleeve 10b. But a different means may be used to selectively rotationally fix the sun gear or any one of the sun gears of the transmission to the axle. Also, the transmission may be a transmission used in a conventional bicycle.

In this embodiment, the first and second clutch elements of the first clutch 3e' of the transmission and the second clutch 3h of the transmission are ratchet clutches. But they may be any other clutches such as roller clutches or sprag clutches. In the embodiment, the two-way clutch 30', which is disposed between the outer ring gear 16d of the reducer and the motor housing 15b, is a roller clutch, but the clutch 30 of the invention may be a sprag clutch.

Also, instead of the two-way clutch 30', the clutch 30 may be a one-way clutch in the form of a ratchet clutch, a roller clutch or a sprag clutch. If a one-way clutch is used instead of the two-way clutch 30', it is necessary to configure the one-way clutch so as not to engage while manual force from the pedals 40 or reverse input from the drive wheel 45 is being applied with no driving force produced from the driving motor 15.

With this arrangement, since the outer ring gear 16d and the planetary gears 16b, of the reducer are freely rotatable around the motor housing 15b, no torque is transmitted to the output shaft 15a of the driving motor 15. This allows the bicycle to travel forward without receiving drag resistance from the motor.

DESCRIPTION OF THE NUMERALS

1. Rear hub (hub)
2. One-way clutch for reverse input
3. Transmission
3a. Sun gear of the transmission
3a-1. First sun gear of the transmission
3a-2. Second sun gear of the transmission
3a-3. Third sun gear of the transmission
3b. Planetary gear of the transmission
3c. Planetary carrier of the transmission
3d. Outer ring gear of the transmission
3e. One-way clutch of the transmission
3e-1. First one-way clutch
3e-2. Second one-way clutch
3e-3. Third one-way clutch
3e'. First clutch of the transmission
3e'-1. First clutch element
3e'-2. Second clutch element
3f. Clutch cam surface of the first clutch of the transmission
3f-1. First clutch element cam surface
3f-2. Second clutch element cam surface
3g. Clutch pawls of the first clutch of the transmission
3g-1. First clutch element pawl

3g-2. Second clutch element pawl

3h. Second clutch of the transmission

3i. Second clutch cam surface of the transmission

3j. Second clutch pawl of the transmission

3k, 3m. Clutch shaft of the transmission

4. Rear sprocket (sprocket/input member)

5. Axle

6. Hub flange

7. Hub case

8. One-way clutch for the sprocket

10. Transmission control mechanism

10a. Control member

10b. Sleeve

10c. Second clutch switching member

10d. Cutout

10e, 10f. Tapered surface

10g. First elastic member

10h. Second elastic member

10i. Guide portion

11, 12, 13, 14. Bearing

15. Driving motor

15a. Output shaft

15b. Motor housing

16. Reducer

16a. Sun gear of the reducer

16b. Planetary gear of the reducer

16c. Shaft

16d. Outer ring gear of the reducer

20. Bearing

30. Clutch

30'. Two-way clutch

30a. Roller

30b. Retainer

30c. Inner ring

30d. Outer ring

30e. Roller clutch cam surface

30f. Switching device

**Claims**

1. An electric power assisted bicycle comprising a drive wheel having a hub (1) and an axle (5), a transmission (3), a reducer (16) and a driving motor (15) which are mounted in the hub (1) so as to be aligned with and in juxtaposition with each other in an axial direction of the axle (5), pedals, a power transmission element, wherein the transmission (3) is capable of transmitting manual driving force applied to the transmission (3) through the pedals and the power transmission element to the drive wheel, wherein the transmission (3) comprises a planetary gear mechanism comprising at least one sun gear (3a), planetary gears (3b) meshing with the sun gear (3a), a planetary carrier (3c) supporting the planetary gears (3b), and an outer ring gear (3d) meshing with the planetary gears (3b), and a transmission control mechanism (10) changeable between a first position where the sun gear (3a) of the transmission is rotationally fixed to the axle (5) and a second position where the sun gear (3a) of the transmission is rotatable relative to the axle (5),

**characterized in that** the reducer comprises a planetary gear mechanism comprising at least one sun gear (16a), planetary gears (16b) meshing with the sun gear (16a) of the reducer, and supported by the planetary carrier (3c) of the transmission or by a member configured to rotate in unison with the planetary carrier (3c) of the transmission, and an outer ring gear (16d) meshing with the planetary gears (16b) of the reducer, wherein the driving motor (15) is mounted in a motor housing (15b), and wherein a clutch (30) is provided between the outer ring gear (16d) of the reducer and the motor housing (15b).

2. The electric power assisted bicycle of claim 1, further comprising an input member (4) to which the power transmission element is connected and which is provided at one end of the axle (5), wherein the driving motor (15) is provided at the other end of the axle (15), and wherein the transmission (3) and the reducer (16) are mounted between the input member (4) and the driving motor (15).

3. The power assisted bicycle of claim 1 or 2, further comprising a one-way clutch (2) for reverse input provided between the sun gear (3a) of the transmission and the axle (5), and a secondary battery, wherein the clutch (30) is a two-way clutch configured such that its engaging direction can be changed by externally operating the clutch (30), wherein reverse input from the drive wheel can be transmitted to the driving motor by locking the one-way clutch (2) for reverse input and the clutch (30), thereby allowing the driving motor (15) to produce electricity, whereby the one-way clutch (2) for reverse input and the clutch (30) constitute a regeneration unit which allows the driving motor to generate electricity which can be stored in the secondary battery while reverse input is being produced.

4. The power assisted bicycle of claim 3, wherein the one-way clutch (2) for reverse input is a ratchet clutch mechanism.

5. The power assisted bicycle of claim 3 or 4, wherein the clutch (30) is a roller clutch mechanism.

6. The power assisted bicycle of claim 5, wherein the clutch (30) comprises an inner ring (30c) having roller clutch cam surfaces (30e) on an outer surface of the motor housing (15b), rollers (30a) held on the respective roller clutch cam surfaces (30e) by a retainer (30b), a cylindrical outer ring (30d) provided on an inner surface of the outer ring gear (16d) of the reducer, an elastic member biasing the rollers (30a) in a first direction in which the rollers (30a) engage while driving force is being applied from the driving motor, and a switching device (30f) coupled to the retainer (30b), wherein the clutch (30) is configured such that rollers (30a) engage in second direction opposite to the first direction by controlling the switching device (30f) while the bicycle is traveling forward without being driven, and such that while the rollers (30a) are engaged in the second direction, reverse input from the drive wheel can be transmitted to the driving motor (15).

7. The power assisted bicycle of claim 3 or 4, wherein the clutch (30) comprises a sprag clutch mechanism.

8. The power assisted bicycle of any of claim 3 to 7, further comprising a brake, wherein the engaging direction of the clutch (30) is changed when the brake is operated.

9. The power assisted bicycle of any of claims 1 to 8, wherein said at least one sun gear (3a) of the transmission comprises a plurality of sun gears (3a), wherein the transmission (3) further comprises one-way clutches (3e) which are disposed between the respective sun gears (3a) of the transmission and the axle (5), and wherein the transmission control mechanism (10) is capable of locking any selected one of the one-way clutches (3e) of the transmission to rotationally fix the sun gear (3a) of the transmission corresponding to the selected one of the one-way clutches (3e) of the transmission, while keeping the other one-way clutch or clutches (3e) of the transmission disengaged and thus keeping the other sun gear or gears (3a) of the transmission rotatable relative to the axle (5).

10. The power assisted bicycle of claim 9, wherein the one-way clutches (3e) of the transmission comprise ratchet clutch mechanisms.

11. The power assisted bicycle of claim 10, wherein the transmission control mechanism (10) comprises a sleeve (10b) rotatably mounted around the axle (5) and is capable of engaging any selected one of the one-way clutches (3e) of the transmission, while keeping the other one-way clutch or clutches (3e) disengaged, by rotating the sleeve (10b) around the axle (5).

12. The power assisted bicycle of claim 11, wherein the one-way clutches (3e) of the transmission each comprise a clutch cam surface formed on one of the corresponding sun gear (3a) of the transmission and the axle (5), and a clutch pawl pivotally mounted to the other of the corresponding sun gear (3a) of the transmission and the axle (5) so as to be engageable with the corresponding clutch cam surface by pivoting, wherein the sleeve (10b) of the transmission control mechanism (10) includes a cutout at its circumferential portion, and can be rotated around the axle (5) to any of a plurality of positions where the clutch pawls of the one-way clutches (3e) of the transmission are radially aligned with the cutout of the sleeve (10b), respectively, and wherein the clutch pawl of any of the one-way clutches (3e) of the transmission can pivot and engage the corresponding clutch cam surface when the clutch pawl is radially aligned with the cutout of the sleeve (10b).

13. The power assisted bicycle of any of claims 1 to 8, wherein each of the planetary gears (16b) of the reducer has two gear portions.

14. The power assisted bicycle of any of claims 1 to 13, further comprising a sprocket (4) and a one-way clutch (8) for the sprocket (4) provided between the sprocket (4) and the planetary carrier (3c) of the transmission.

15. The power assisted bicycle of any of claims 1 to 14, wherein the driving motor (15) has an output shaft (15a), and wherein the output shaft (15a) and the axle (5) are coaxially connected together, and are supported so as to be rotatable relative to each other by a bearing (20).

16. The power assisted bicycle of claim 1, wherein the transmission further comprises a first clutch (3e') which is changeable between an engaged position where the sun gear (3a) of the transmission is rotationally fixed to the axle (5) through the first clutch (3e') of the transmission and a disengaged position where the sun gear (3a) of the transmission is allowed to rotate relative to the axle (5), both while manual force is being applied from the pedals and while reverse input is being applied from the drive wheel, wherein the transmission control mechanism (10) is capable of moving the first clutch (3e') of the transmission between the engaged position and the disengaged position, whereby manual force from the pedals is transmitted through the power transmission element to the planetary carrier (3c) of the transmission, and then to the drive wheel at a one-to-one or higher speed ratio, wherein reverse input from the drive wheel can be transmitted to the driving motor (15), thereby allowing the driving motor (15) to produce electricity, and wherein the bicycle further includes a regeneration unit for storing electricity produced by the driving motor while reverse input is being applied to the driving motor in a secondary battery.

17. The power assisted bicycle of claim 16, wherein the transmission (3) further comprises a second clutch (3h) disposed between the sun gear (3a) of the transmission and the planetary carrier (3c) of the transmission, and movable between an engaged position where the sun gear (3a) of the transmission and the carrier (3c) of the transmission are rotationally fixed to each other through the second clutch (3h) of the transmission and a disengaged position where the sun gear (3a) of the transmission and the carrier (3c) of the transmission are kept rotatable relative to each other through the second clutch (3h) of the transmission.

18. The power assisted bicycle of claim 17, wherein each of the planetary gears (3b) of the transmission has a plurality of gear portions, wherein said at least one sun gear (3a) of the transmission comprises sun gears which are equal in number to the number of the gear portions of each planetary gear (3b) of the transmission and which mesh with the respective gear portions of each planetary gear (3b) of the transmission, and wherein any one of the sun gears (3a) of the transmission can be selectively rotationally fixed to the axle (5) while the bicycle is being driven, thereby providing one of a plurality of different speed increase ratios.

19. The power assisted bicycle of claim 18, wherein the second clutch (3h) of the transmission is disposed between the planetary carrier (3c) of the transmission and one of the sun gears (3a) which meshes with one of the gear portions of each planetary gear (3b) of the transmission which carries the smallest number of teeth.

20. The power assisted bicycle of any of claims 16 to 19, wherein the power transmission element and the planetary carrier (3c) of the transmission are connected together through an input member 4 provided at one end of the axle (5) and on one side of the hub (1), wherein the driving motor (15) is provided at the other end of the axle (5) and on the other side of the hub (1), and wherein the transmission (3) and the reducer (16) are mounted between the input member (4) and the driving motor (5).

21. The power assisted bicycle of any of claims 16 to 20, wherein the clutch (30) is a two-way clutch (30') which is provided between the motor housing (15b) and the outer ring gear (16d) of the reducer, and of which the engaging direction is changeable.

22. The power assisted bicycle of claim 21, wherein the two-way clutch (30') is a roller clutch.

23. The power assisted bicycle of claim 21 or 22, further comprising a brake, wherein the engaging direction of the two-way clutch (30') is changed when the brake is operated.

24. The power assisted bicycle of any of claims 16 to 23, wherein the first clutch (3e') of the transmission is a ratchet clutch.

25. The power assisted bicycle of claim 24, wherein the first clutch (3e') of the transmission comprises first clutch pawls (3g) provided on the outer surface of the axle (5) and first clutch cam surfaces (3f) which are formed on an inner surface of the sun gear (3a) of the transmission and with which the first clutch pawls (3g) are engageable, both while driving force is being applied and while reverse input is being applied.

26. The power assisted bicycle of any of claims 17 to 19, wherein the second clutch (3h) of the transmission is a ratchet clutch.

27. The power assisted bicycle of claim 26, wherein the second clutch (3h) of the transmission comprises second clutch pawls (3j) provided on the outer surface of the sun gear (3a) of the transmission, and second clutch cam surfaces (3i) which are formed on an inner surface of the planetary carrier (3c) of the transmission and with which the second clutch pawls (3j) are engageable, both while driving force is being applied and while reverse input is being applied.

28. The power assisted bicycle of claim 27, wherein the transmission control mechanism (10) comprises a sleeve (10b) formed with cutouts (10d) and mounted around the axle (5) so as to be rotatable relative to the axle (5), and a second clutch switching member (10c) configured to be moved in an axial direction of the axle (5) when the sleeve (10b) rotates around the axle (5), wherein the sleeve (10b) is rotatable between a first position where the first clutch (3e') of the transmission is engaged and a second position where the first clutch (3e') of the transmission is not engaged, both while driving force is being applied and while reverse input is being applied, and wherein the second clutch switching member (10c) is movable in the axial direction of the axle (5) between a first position where the second clutch (3h) of the transmission is engaged and a second position where the second clutch (3h) of the transmission is not engaged, both while driving force is being applied and while reverse input is being applied.

29. The power assisted bicycle of claim 28, wherein the transmission control mechanism (10) further comprises a control member (10a) coupled to the sleeve (10b) and protruding from the hub (1), and wherein the sleeve (10b) can be rotated around the axle (5) by operating the control member (10a).

30. The power assisted bicycle of claim 28 or 29, wherein the sleeve (10b) is biased by a first elastic member (10g) in a first circumferential direction of the axle (5), wherein the second clutch switching member (10c) is biased by a second elastic member (10h) in a first axial direction of the axle (5), wherein the second clutch switching member (10c) is configured to be moved in a second axial direction of the axle (5) which is opposite to the first axial direction against the force of the second elastic member (10h) when the sleeve (10b) is rotated in a second circumferential direction opposite to the first circumferential direction against the force of the first elastic member (10g), and wherein the second clutch switching member (10c) is further configured to be moved in the first axial direction under the force of the second elastic member (10h) when the sleeve (10b) is rotated in the first circumferential direction under the force of the first elastic member (10g).

31. The power assisted bicycle of any of claims 28 to 30, wherein the transmission further comprises clutch shafts (3k) supported by the axle (5) and pivotally supporting the respective first clutch pawls (3g) of the transmission so as to be pivotable relative to the axle (5), the first clutch pawls (3g) of the transmission each having first and second ends, and elastic members biasing the respective first clutch pawls (3g) of the transmission in a direction in which the first ends thereof can engage any of the first clutch cam surfaces (3f) of the transmission, and wherein when the sleeve (10b) of the transmission control mechanism (10) is in said second position, the sleeve (10b) abuts the second ends of the respective first clutch pawls (3g) of the transmission at its portions other than the cutouts (10b), thereby preventing the first clutch pawls (3g) of the transmission from pivoting until their first ends engage any of the first clutch cam surfaces (3f) of the transmission, both while driving force is being applied and while reverse input is being applied, and when the sleeve (10b) is in said first position, the first clutch pawls (3g) are allowed to pivot until the first ends thereof engage selected ones of the first clutch cam surfaces (3f) with the second ends thereof engaged in the respective cutouts (10d) of the sleeve (10b), both while driving force is being applied and while reverse input is being applied.

32. The power assisted bicycle of any of claims 28 to 31, wherein the transmission further comprises clutch shafts (3m) supported by the sun gear (3a) of the transmission and pivotally supporting the respective second clutch pawls (3j) of the transmission so as to be pivotable relative to the sun gear (3a), the second clutch pawls (3j) of the transmission each having first and second ends, and elastic members biasing the respective second clutch pawls (3j) of the transmission in a direction in which the first ends thereof can engage any of the second clutch cam surfaces (3i) of the transmission, and wherein when the second clutch switching member (10c) of the transmission control mechanism (10) is in said second position, the second clutch switching member (10b) abuts the second ends of the respective second clutch pawls (3j) of the transmission, thereby preventing the second clutch pawls (3j) of the transmission from pivoting until their first ends engage any of the second clutch cam surfaces (3i) of the transmission, both while driving force is being applied and while reverse input is being applied, and when the second clutch switching member (10c) is in said first position, the second clutch switching member (10c) is spaced from the second ends of the second clutch pawls (3j), whereby the second clutch pawls (3j) are allowed to pivot until the first ends thereof engage selected ones of the second clutch cam surfaces (3i), both while driving force is being applied and while reverse input is being applied.

33. The power assisted bicycle of claim 32, wherein the cutouts (10d) each have first and second tapered surfaces (10e and 10f) at respective ends thereof with respect to the circumferential direction of the axle (5), wherein when in order to change the speed ratio, the sleeve (10b) is rotated in either of the circumferential directions of the axle (5) to disengage the second clutch pawls (3j) of the transmission from selected ones of the second clutch cam surfaces (3i) of the transmission, the second ends of the second clutch pawls (3j) of the transmission are configured to contact the first tapered surfaces (10e) or the second tapered surfaces (10f) of the corresponding second clutch cam surfaces (3i) of the transmission.

34. The power assisted bicycle of any of claims 16 to 33, wherein each of the planetary gears (16b) of the reducer includes two gear portions each carrying teeth which are different in number from the number of teeth of the other gear portion.

35. The power assisted bicycle of any of claim 16 to 34, wherein the power transmission element and the planetary carrier (3c) of the transmission are connected together through an input member (4), and wherein a one-way clutch (8) is mounted between the input member (4) and the planetary carrier (3c) of the transmission.

36. The power assisted bicycle of any of claims 16 to 35, wherein the driving motor (15) has an output shaft (15a), and wherein the output shaft (15a) and the axle (5) are coaxially connected together, and are supported so as to be rotatable relative to each other by a bearing (20).

# Fig.1

# Fig.2

# Fig.3

# Fig.4

Fig.5

## Fig.6A

## Fig.6B

# Fig.6C

Fig.7

## Fig.8A

## Fig.8B

# Fig.8C

Fig.9

## Fig.10A

## Fig.10B

# Fig.10C

Fig.11

# Fig.12A

# Fig.12B

# Fig.12C

# Fig.13

(a)

(b)

(c)

# Fig.14

# Fig.15

# Fig.16

# Fig.17

## INTERNATIONAL SEARCH REPORT

| | International application No. |
|---|---|
| | PCT/JP2011/064033 |

**A. CLASSIFICATION OF SUBJECT MATTER**
*B62M6/65*(2010.01)i, *F16H3/44*(2006.01)i, *F16H3/54*(2006.01)i

According to International Patent Classification (IPC) or to both national classification and IPC

**B. FIELDS SEARCHED**

Minimum documentation searched (classification system followed by classification symbols)
B62M6/65, F16H3/44, F16H3/54

Documentation searched other than minimum documentation to the extent that such documents are included in the fields searched
Jitsuyo Shinan Koho        1922-1996   Jitsuyo Shinan Toroku Koho    1996-2011
Kokai Jitsuyo Shinan Koho   1971-2011   Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2003-95181 A  (Sanyo Electric Co., Ltd.),<br>03 April 2003 (03.04.2003),<br>paragraphs [0025] to [0032]; fig. 1 to 8<br>(Family: none) | 1,15<br>14<br>2-13,16-36 |
| Y<br>A | JP 2003-164012 A  (Sanyo Electric Co., Ltd.),<br>06 June 2003 (06.06.2003),<br>paragraphs [0008] to [0011]; fig. 1 to 3<br>(Family: none) | 14<br>2-13,16-36 |
| A | JP 2002-356190 A  (Honda Motor Co., Ltd.),<br>10 December 2002 (10.12.2002),<br>paragraphs [0040] to [0043], [0053] to [0056],<br>[0064] to [0066]; fig. 1 to 28<br>& DE 10219332 A1       & NL 1020257 C2<br>& TW 530773 U          & CN 1389359 A | 3,16 |

☐ Further documents are listed in the continuation of Box C.      ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>06 September, 2011 (06.09.11) | Date of mailing of the international search report<br>13 September, 2011 (13.09.11) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2011/064033

| Box No. II      Observations where certain claims were found unsearchable (Continuation of item 2 of first sheet) |
|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III      Observations where unity of invention is lacking (Continuation of item 3 of first sheet) |
|---|

This International Searching Authority found multiple inventions in this international application, as follows:
    The invention in claim 1 cannot be considered to be novel in the light of the invention described in the document 1 (JP 2003-95181 A (Sanyo Electric Co., Ltd.), 3 April 2003 (03.04.2003), paragraphs [0025]-[0032], fig. 1-8, (Family: none)), and does not have a special technical feature.
    That is, the matter set forth in claim 1 cannot be deemed as a special technical feature within the meaning of PCT Rule 13.2, second sentence.
    Consequently, the invention in claim 1 and the inventions in claims 16-36 do not have a common matter which can be a special technical feature, and therefore do not comply with unity.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 586 694 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9058568 A
- JP 2000043780 A
- JP 2002298285 A
- JP 2003160089 A